# EUROPÄISCHE PATENTSCHRIFT

(11) **EP 2 543 498 B1**
(45) Veröffentlichungstag und Bekanntmachung des Hinweises auf die Patenterteilung: **16.12.2015**
(21) Anmeldenummer: 12173964.3
(22) Anmeldetag: 27.06.2012
(51) Int. Cl.: B29C 67/00, B22F 3/105, B33Y 10/00, B33Y 30/00, B33Y 80/00, B33Y 40/00

(54) **Verfahren zum Ausbilden eines dreidimensionalen Bauteils und dreidimensionales Bauteil mit Halterahmen**
Method for forming a three-dimensional component and three-dimensional component with holder frame
Procédé pour la formation d'un composant tridimensionnel et composant tridimensionnel avec cadre de support

(30) Priorität: 27.06.2011 DE 102011051347
(43) Veröffentlichungstag der Anmeldung: 09.01.2013
(73) Patentinhaber: ExOne GmbH, 86167 Augsburg (DE)
(72) Erfinder: Höchsmann, Rainer, 86863 Langenneufnach (DE)
(74) Vertreter: Viering, Jentschura & Partner mbB Patent- und Rechtsanwälte

(56) Entgegenhaltungen:
- EP-A1- 2 022 622
- DE-A1-102007 033 434
- DE-B3-102007 048 385
- US-A1- 2008 243 455

## Beschreibung

Die Erfindung betrifft ein Verfahren zum Ausbilden eines dreidimensionalen Bauteils sowie ein dreidimensionales Bauteil, welches z.B. gemäß dem Verfahren der Erfindung herstellt wurde.

Ein derartiges Verfahren ist z.B. aus der EP 0 431 924 B1 bekannt, wonach ein loses Partikelmaterial sukzessive in dünnen Schichten auf eine Plattform aufgetragen wird und das Partikelmaterial der jeweiligen dünnen Schicht selektiv verfestigt wird, um dadurch ein dreidimensionales verfestigtes Bauteil zu erzeugen. Das Verfestigen des Partikelmaterials kann z.B. mittels eines Bindermaterials erfolgen, das mittels eines Druckkopfs auf den jeweils zu verfestigenden Partikelbereich pro Partikelschicht aufgedruckt wird. Der mit dem Binder bedruckte Partikelbereich verklebt und verfestigt sich durch den Einfluss des Binders. Die Plattform wird nach dem jeweiligen Druckvorgang um eine Schichtdicke abgesenkt, worauf die nächste lose Partikelschicht aufgebracht wird. Das dreidimensionale Bauteil wird damit insgesamt durch sukzessives schichtweises selektives Verfestigen des losen Partikelmaterials ausgebildet bzw. hergestellt. Nach dem fertigen Ausbilden des Bauteils kann dieses ergriffen und von dem verbleibenden losen Partikelmaterial befreit werden, z.B. durch Schütteln und/oder durch Blasen mit Druckluft oder durch Absaugen des losen Partikelmaterials.

Das selektive Verfestigen von losem Partikelmaterial kann auch mittels selektiven Lasersinterns oder Elektronenstrahl-Sinterns erfolgen.

Weil ein direktes Ergreifen des Bauteils zu einer Beschädigung des Bauteils führen kann, sind z.B. in der DE 10 2007 033 434 A1 Lösungen vorgeschlagen worden, um dies zu vermeiden. Hiernach wird beim Ausbilden des Bauteils ein Hilfsrahmen mit ausgebildet, der z.B. direkt über dünne Stege stoffschlüssig mit dem Bauteil verbunden ist oder der indirekt mit dem Bauteil verbunden ist, z.B. formschlüssig oder alternativ zum Formschluss mit geringem Abstand, sodass kleine Bewegungen des Bauteils relativ zum Hilfsrahmen zugelassen sind. Das Lösen des Stoffschlusses ist jedoch aufwändig und birgt immer noch die Gefahr einer Beschädigung des Bauteils. Der Formschluss ist schwierig herzustellen und die kleinere Bewegungen zulassende Abstützung birgt ebenfalls die Gefahr von Beschädigungen am Bauteil.

DE 10 2007 048 385 B3 offenbart ein Verfahren zur Herstellung eines Bauteils, das im Wege eines generativen Fertigungsprozesses hergestellt wird, gemäß dem Oberbegriff des Anspruchs 1 und ein Bauteil gemäß dem Oberbegriff des Anspruchs 10.

Die Erfindung stellt ein Verfahren nach Anspruch 1 sowie ein Bauteil mit Halterahmen nach Anspruch 10 bereit. Weitere Ausführungsformen der Erfindung sind in den abhängigen Ansprüchen beschrieben.

Es wird ein Verfahren geschaffen, mit welchem ein dreidimensionales Bauteil durch sukzessives schichtweises selektives Verfestigen eines losen Partikelmaterials ausgebildet bzw. hergestellt werden kann, das nach seiner Ausbildung einfach und sicherer handhabbar ist.

Gemäß einer Ausführungsform wird ein Verfahren zum Ausbilden eines dreidimensionalen Bauteils durch sukzessives schichtweises selektives Verfestigen eines losen Partikelmaterials bereitgestellt, wobei beim Ausbilden des dreidimensionalen Bauteils zusätzlich ein Halterahmen mitausgebildet wird, wobei der Halterahmen und/oder das Bauteil mit einer Mehrzahl von Halteräumen ausgebildet wird, welche jeweils eine den Halteraum ringförmig bzw. hülsenförmig im Wesentlichen umgebende Halteraumwand aufweisen, welche eine ringförmige bzw. hülsenförmig Halteraum-Innen(flächen)kontur und eine Halteraumöffnung definiert, wobei in die Halteräume eine entsprechende Mehrzahl von am Bauteil und/oder am Halterahmen ausgebildeten Halteabschnitten mit einer Halteabschnitt-Außen(flächen)kontur über die zugehörige Halteraumöffnung eingreifen, wobei die jeweilige Halteabschnitt-Außenkontur umfänglich zu der jeweiligen Halteraum-Innenkontur im Wesentlichen konform bzw. komplementär ausgebildet wird, wobei die Halteraum-Innenkontur und die Halteabschnitt-Außenkontur jeweils in einem geringen Abstand zueinander angeordnet werden, wodurch zwischen der Halteraum-Innenkontur und der Halteabschnitt-Außenkontur ein ringförmiger bzw. hülsenförmiger Spalt ausgebildet wird, wobei nicht verfestigtes Partikelmaterial außerhalb des jeweiligen Spalts von dem fertigausgebildeten Bauteil entfernt wird, sodass in dem jeweiligen Spalt nicht-verfestigtes (und damit loses) Partikelmaterial im Kontakt mit der Halteraum-Innenkontur und der Haltestück-Außenkontur verbleibt, sodass das Bauteil über das im jeweiligen Spalt verbleibende (nicht-verfestigte) Partikelmaterial spielfrei am Halterahmen abgestützt bleibt. Das Verfahren wird z.B. vollautomatisch durchgeführt. Anstelle eines Partikelmaterials kann z.B. auch ein anderes zur schichtweisen Verfestigung geeignetes Material, wie z.B. ein Gelmaterial, herangezogen werden.

Das Ausbilden des Bauteils als solches kann wie oben im Zusammenhang mit der Beschreibung des Stands der Technik erfolgen. D.h., es kann wie folgt vorgegangen werden: es wird wiederholt eine Schicht aus losem Partikelmaterial auf eine Plattform aufgebracht und gesteuert selektiv verfestigt. Danach wird Plattform um eine Schichtdicke abgesenkt und die nächste Schicht aus losem Partikelmatirial auf die zuvor aufgebrachte Schicht aufgebracht und wiederum gesteuert selektiv verfestigt. Aufgrund der wiederholten Ausführung dieser Schritte wächst das Bauteil auf der Plattform sukzessive, umgeben von nicht verfestigtem Partikelmaterial. In gleicher Weise wird der Halterahmen mit ausgebildet.

Das Ausbilden des Bauteils und des Halterahmens erfolgt z.B. anhand einer Baubox oder Jobbox, welche z.B. einen Boden und eine den Boden umgebende sowie eine Öffnung definierende Umfangswand aufweist und in welche hinein (von der Öffnung aus) die Plattform absenkbar ist. Ein fest mit der Umfangswand verbundener Boden kann auch weggelassen werden, wobei der nach unten die Baubox abschließende Boden von der absenkbaren Plattform gebildet sein kann. Damit werden letztlich das Bauteil und damit auch der Halterahmen in der Baubox ausgebildet, in welcher das fertig ausgebildete Bauteil schließlich von dem nicht-verfestigten Partikelmaterial umgeben vorliegt.

Gemäß dem beschriebenen Verfahren ist das Bauteil über die mehreren (mindestens zwei) Eingriffe zwischen den mehreren (mindestens zwei) Halteräumen und den zugeordneten mehreren (mindestens zwei) Halteabschnitten dadurch spielfrei abgestützt, dass loses Partikelmaterial in dem in diesen Eingriffen jeweils vorliegenden Spalt im Kontakt mit der jeweils zugehörigen Halteraum-Innenkontur und Halteabschnitt-Außenkontur vorliegt. Das Bauteil kann nunmehr einfach und sicher gehandhabt werden, um es z.B. aus der Baubox zu entnehmen und/oder um z.B. restliches loses Partikelmaterial von seiner Außenseite zu entfernen, indem es indirekt durch direktes Ergreifen des Halterahmens ergriffen wird. Das in dem Spalt vorliegende Partikelmaterial verhindert Spiel und eine Bewegung des Bauteils relativ zu dem Halterahmen, sodass das Bauteil nicht durch andernfalls via Spiel mögliche kleine Stoßbewegungen gegen die Halteraum-Innenkontur beschädigt werden kann.

Am Halterahmen indirekt ergriffen kann das Bauteil dann einer Schüttelvorrichtung und/oder Saugvorrichtung und/oder Gebläsevorrichtung zugeführt werden, um restliches anhaftendes Partikelmaterial außerhalb des Spalts vom Bauteil zu entfernen.

Beim Lösen des Bauteils vom Halterahmen besteht aufgrund der indirekten Abstützung über das im Spalt befindliche lose Partikelmaterial ebenfalls verringerte Gefahr einer Beschädigung des Bauteils. Der Halterrahm kann hierzu z.B. einfach auseinandergebrochen werden, oder der Halterrahmen kann auch in Form von wenigstens zwei stofflich separaten und miteinander im Eingriff stehenden, z.B. zusammensteckenden, Rahmenteilen derart ausgebildet werden (zusammen mit dem Bauteil (d.h. im Rahmen dessen Verfestigungsprozesses) mitausgebildet werden), dass das Bauteil durch bloßes Außereingriffbringen der mindestens zwei Rahmenteile von dem Halterahmen lösbar ist. Eine Greifvorrichtung zum Ergreifen des Halterahmens ist hierbei z.B. derart ausgebildet, dass die Greifvorrichtung die beiden Rahmenteile in Eingriffsrichtung, z.B. in Zusammensteckrichtung, aneinanderhält bzw. aneinanderdrückt oder aneinanderpresst. Hierzu kann die Greifvorrichtung z.B. ein Paar aufeinander zu und voneinander weg bewegbare Haltebacken haben.

Das Bauteil ist z.B. derart über die Eingriffe zwischen den Halteräumen und den Halteabschnitten am Rahmen abgestützt, dass es in alle Richtungen spielfrei und damit bewegungsfrei am Halterahmen gehalten ist.

Die im Wesentlichen ringförmige Halteraumwand stellt damit eine Ringwand dar, welche eine offene, z.B. mit einem oder mehreren kleineren Schlitzen, oder (komplett) geschlossene Ringform aufweisen kann. Die Ringform kann eine beliebige geometrische Form, z.B. eine Kreisform, eine Ovalform oder auch Polygonform, z.B. Dreiecksform, Vierecksform, etc., sein. Die damit vorliegende Halteraum-Innenkontur und die Halteabschnitt-Außenkontur und damit letztlich der Spalt dazwischen, in welchem das lose Partikelmaterial vorliegt, haben damit z.B. eine Zylinderform, z.B. eine Kreiszylinderform, Polygonzylinderform, etc., wobei die Halteraum-Innenkontur und die Halteabschnitt-Außenkontur auch eine sich verjüngende Form, z.B. eine Kegel- oder Pyramidenform oder gewölbte, z.B. sphärisch gewölbte, Form aufweisen können. D.h., im letzteren Falle hat die Ringwand eine sich entsprechend verjüngend erstreckende Ringform. Die Verjüngung kann z.B. vom Halterahmen aus in Richtung zu dem Bauteil hin oder vom Bauteil aus in Richtung zu dem Halterahmen hin vorliegen.

Das Bauteil kann nunmehr ferner anhand des Halterahmens gehandhabt werden, z.B. zur Aufbewahrung bzw. Zwischenlagerung zusammen mit dem Halterahmen in einer Ablage, z.B. einer Regalablage abgelegt werden, und auch zusammen mit dem Halterahmen transportiert werden, wobei die Trennung vom Halterahmen z.B. auch unmittelbar am Einsatzort erfolgen kann, z.B. am Montageort, wo das Bauteil in eine zugehörige Maschine als Funktionsbauteil einzubauen ist.

Z.B. werden wenigstens einer, mehrere oder alle der Halteräume als muldenförmige Halteräume ausgebildet, bei denen die ringförmige Halteraumwand einen Halteraumboden (welcher der Halteraumöffnung gegenüberliegt) ringförmig im Wesentlichen umgibt und welche eine dreidimensionale kalottenartige (oder/z.B. kappenartige) Halteraum-Innenkontur aufweisen. Die den muldenförmigen Halteräumen zugeordneten Halteabschnitte können mit einer zu der kalottenartigen Halteraum-Innenkontur im Wesentlichen konformen Halteabschnitt-Außenkontur ausgebildet werden, sodass als Spalt zwischen der Halteabschnitt-Innenkontur und der Halteabschnitt-Außenkontur ein kappenartiger Spalt erzeugt wird, in welchem nicht-verfestigtes Partikelmaterial verbleibt. Mit der muldenförmigen Ausbildung kann z.B. dazu beigetragen werden, das im Spalt vorliegende lose Partikelmaterial besser vor einem ungewollten Entfernen zu schützen, und auch dazu beigetragen werden, das Bauteil einfacher in mehrere, z.B. alle, Richtungen spielfrei am Halterahmen zu fixieren bzw. daran abzustützen.

Z.B. werden zumindest zwei Halteräume an im Wesentlichen einander entgegengesetzten Endabschnitten des Bauteils ausgebildet. Dies kann z.B. dazu beitragen, das Bauteil in einfacherer Weise spielfrei in mehrere, z.B. in alle, Richtungen spielfrei am Halterahmen zu fixieren.

Z.B. wird der Halterahmen derart ausgebildet, dass der Halterahmen das Bauteil zumindest teilweise oder vollständig umgibt. Der Halterahmen kann ein offener Rahmen sein, z.B. in Form einer einfach langgestreckten Leiste, in Form eines C oder in Form eines U mit einer U-Rahmenbasis und U-Rahmenschenkeln. Der Rahmen kann auch ein Handhabungsgriff oder ein Ergreifungsstück sein. Der Halterhamen kann auch ein geschlossener Rahmen sein. Der Rahmen kann ferner stofflich einstückig oder auch aus mehreren voneiander separaten Rahmenteilen (z.B. Rahmenleisten) aufgebaut sein. Die Halteräume und/oder die Halteabschnitte werden am Halterahmen (mit)ausgebildet, z.B. in Form von Vorsprüngen, die an den Rahmen angeformt werden, und/oder in Form von Vertiefungen und/oder von Aussparungen, die in dem Rahmen ausgeformt werden. Jegliches Formen des Rahmens und der darin oder daran aus- bzw. angeformten Halteräume und/oder Halteabschnitte erfolgt durch entsprechendes schichtweises selektives Verfestigen des losen Partikelmaterials beim Ausbilden des Bauteils.

Z.B. kann einem Bauteil jeweils individuell ein jeweiliger Halterahmen zugeordnet sein. Es ist aber auch möglich, dass in bzw. an ein und demselben Halterahmen eine Mehrzahl von Bauteilen in der wie hierin beschriebenen Weise (indirekt) abgestützt sind. Z.B. können in einer Baubox übereinanderliegend mehrere Halterahmen mit jeweils einer Mehrzahl von daran abgestützten Bauteilen ausgebildet werden. Der jeweilige Halterahmen mit den daran abgestützten Bauteilen in dem Paket aus übereinanderliegenden Halterahmen kann z.B. als Schichtgruppe bezeichnet werden. Eine solche Schichtgruppe kann auch von mehreren voneinander (stofflich) separaten, horizontal nebeneinander liegenden Halterahmen mit jeweils mehreren daran abgestützten Bauteilen gebildet werden/sein oder kann von mehreren voneinander (stofflich) separaten, horizontal nebeneinander liegenden Halterahmen mit jeweils genau einem zugeordneten Bauteil gebildet werden/sein.

Z.B. wird der Halterahmen als Rahmenschenkel oder Rahmenleisten aufweisend ausgebildet wird, wobei einer, mehrere oder alle der Halteräume in Form von Ausnehmungen oder Vertiefungen in den Rahmenschenkeln oder den Rahmenleisten ausgebildet werden, und/oder es werden z.B. einer, mehrere oder alle der Halteabschnitte am Halterahmen und/oder am Bauteil als Vorsprung oder als Vorsprünge ausgebildet, und/oder es werden z.B. einer, mehrere oder alle der Halteräume an Haltestegen ausgebildet, die am Halterahmen angeformt werden und sich vom Halterahmen in Richtung zum Bauteil erstrecken.

Z.B. wird der jeweilige Spalt mit einer Spaltweite von kleiner gleich 10 mm oder kleiner gleich 5 mm oder kleiner gleich 3 mm oder kleiner gleich 2 mm oder kleiner gleich 1 mm oder kleiner gleich 0,5 mm ausgebildet, wobei die Spaltweite des jeweiligen Spalts konstant ist oder variiert. Die Spaltweite kann z.B. davon abhängen, welche Form und Abmessungen die einander gegenüberliegenden, den Spalt begrenzenden Innenkonturen und Außenkonturen der Halteräume bzw. der Halteabschnitte aufweisen. Im Falle eines kappenartigen bzw. kalotten- oder schüsselartigen Spalts kann das Material aufgrund der Kombination aus ringförmiger Halteraumwand und Halteraumboden schlechter aus dem Spalt gelangen, sodass z.B. mit größerer Spaltweite gearbeitet werden kann. Bei nur ringförmigem Eingriff kann z.B. der Spalt kleiner vorgesehen werden.

Es ist z.B. möglich, das Bauteil neben den indirekt über das lose Partikelmaterial in den Spalten erfolgenden Eingriffen zusätzlich über dünne Stege zwischen dem Halterahmen und dem Bauteil auch stoffschlüssig zu halten. Gemäß einer Ausführungsform ist das Bauteil jedoch nicht stoffschlüssig mit dem Halterahmen verbunden, sondern nur indirekt über das in den (zwischen den Halteraum-Innenkonturen und den Halterabschnitt-Außenkonturen ausgebildeten) Spalten vorliegende lose Partikelmaterial am Halterahmen abgestützt. Z.B. wird der Halterahmen in Form von wenigstens zwei stofflich voneinander separaten und miteinander im Eingriff stehenden Rahmenteilen derart ausgebildet wird, dass das Bauteil durch bloßes Außereingriffbringen der mindestens zwei Rahmenteile von dem Halterahmen lösbar ist. Die Rahmenteile werden z.B. derart ausgebildet, dass sie in einem Steckeingriff miteinander stehen. Der Halterahmen kann z.B. als geschlossener vierseitiger Rahmenkasten ausgebildet werden, wobei jede Rahmenseite von einer separaten Rahmenleiste bzw. einem separaten Rahmenteil ausgebildet wird, die mit ihren beiden jeweils benachbarten Rahmenleisten im Eingriff, z.B. im Steckeingriff ist.

Wie oben angesprochen wird das Bauteil z.B. in einer Jobbox oder Baubox ausgebildet, mit welcher z.B. weder der Halterahmen noch das Bauteil stoffschlüssig verbunden werden.

Z.B. werden in der Baubox eine Mehrzahl von voneinander (stofflich) separaten Bauteilen in der wie vorausgehend beschriebenen Weise ausgebildet, wobei die zugehörigen Halterahmen ebenfalls (stofflich) separat voneinander und (stofflich) separat von anderen Bauteilen und von der Baubox ausgebildet werden. Einem Rahmen können genau ein Bauteil oder mehrere Bauteile zugeordnet sein.

Z.B. wird das jeweilige fertigausgebildete Bauteil an seinem zugeordneten Halterahmen ergriffen, um es dadurch durch Entnehmen des Halterahmens aus der Baubox mit dem Halterahmen zusammen aus der Baubox mitzuentnehmen. Das Entnehmen des jeweiligen Bauteils aus der Baubox kann vollautomatisch erfolgen.

Es wird ferner ein dreidimensionales Bauteil mit Halterahmen bereitgestellt, wobei das Bauteil mit dem Halterahmen gemeinsam hergestellt sind durch sukzessives schichtweises selektives Verfestigen eines losen Partikelmaterials, z.B. gemäß einem wie hierin beschriebenen Verfahren, wobei der Halterahmen und/oder das Bauteil eine Mehrzahl von Halteräumen aufweist, welche jeweils eine den Halteraum ringförmig bzw. hülsenförmig im Wesentlichen umgebende Halteraumwand aufweisen, welche eine ringförmige bzw. hülsenförmige Halteraum-Innen(flächen)kontur und eine Halteraumöffnung definiert, wobei in die Halteräume eine entsprechende Mehrzahl von am Bauteil bzw. am Halterahmen ausgebildeten Halteabschnitten mit einer Halteabschnitt-Außen(flächen)kontur über die zugehörige Halteraumöffnung eingreifen, wobei die jeweilige Halteabschnitt-Außenkontur umfänglich zu der jeweiligen Halteraum-Innenkontur im Wesentlichen konform bzw. komplementär ausgebildet ist, wobei die Halteraum-Innenkontur und die Halteabschnitt-Außenkontur jeweils in einem geringen Abstand zueinander angeordnet sind, wodurch zwischen der Halteraum-Innenkontur und der Halteabschnitt-Außenkontur ein ringförmiger bzw. hülsenförmiger Spalt vorliegt, in welchem nicht-verfestigtes Partikelmaterial im Kontakt mit der Halteraum-Innenkontur und der Haltestück-Außenkontur vorliegt, über welches das Bauteil spielfrei am Halterahmen abgestützt ist.

Wie oben erläutert kann damit das Bauteil indirekt ergriffen werden durch direktes Ergreifen des Halterahmens. Die ferner indirekte spielfreie Abstützung des Bauteils am Halterahmen über das im jeweiligen Spalt vorliegende nicht-verfestigte und damit lose Partikelmaterial erlaubt ein sichereres Handhaben des Bauteils.

Z.B. können wenigstens einer, mehrere oder alle der Halteräume als muldenförmige Halteräume ausgebildet sein, bei denen die ringförmige Halteraumwand einen Halteraumboden ringförmig im Wesentlichen (d.h. komplett oder z.B. mit einem oder mehreren kleinen Schlitzöffnungen) umgibt und welche eine dreidimensionale kalottenartige Halteraum-Innenkontur aufweisen. Z.B. können die den muldenförmigen Halteräumen zugeordneten Halteabschnitte mit einer zu der kalottenartigen Halteraum-Innenkontur im Wesentlichen konformen Halteabschnitt-Außenkontur ausgebildet sein, sodass als Spalt zwischen der Halteabschnitt-Innenkontur und der Halteabschnitt-Außenkontur ein kappenartiger Spalt vorliegt, in welchem nicht-verfestigtes Partikelmaterial vorliegt. Z.B. können zumindest zwei Halteräume an im Wesentlichen einander entgegengesetzten Endabschnitten des Bauteils ausgebildet werden. Z.B. umgibt der Halterahmen das Bauteil zumindest teilweise oder geschlossen (komplett). Z.B. ist der Halterahmen als Rahmenschenkel oder Rahmenleisten aufweisend ausgebildet, wobei einer, mehrere oder alle der Halteräume in Form von Ausnehmungen oder Vertiefungen in den Rahmenschenkeln oder den Rahmenleisten ausgebildet sind. Z.B. sind einer, mehrere oder alle der Halteabschnitte am Halterahmen und/oder am Bauteil als Vorsprung oder als Vorsprünge ausgebildet. Z.B. sind einer, mehrere oder alle der Halteräume an Haltestegen ausgebildet, die am Halterahmen angeformt sind und sich vom Halterahmen in Richtung zum Bauteil erstrecken. Die Haltestege können hierzu an ihrem vom Halterahmen abgewandten freien Ende kopfartig verbreitert sein, in welchem Kopf der Halteraum ausgebildet ist. Z.B. ist der jeweilige Spalt mit einer Spaltweite von kleiner gleich 10 mm oder kleiner gleich 5 mm oder kleiner gleich 3 mm oder kleiner gleich 2 mm oder kleiner gleich 1 mm oder kleiner gleich 0,5 mm ausgebildet, wobei die Spaltweite des jeweiligen Spalts konstant ist oder variiert. Z.B. ist das Bauteil nicht stoffschlüssig mit dem Halterahmen verbunden. Z.B. ist der Halterahmen in Form von wenigstens zwei stofflich separaten und miteinander im Eingriff stehenden Rahmenteilen derart ausgebildet, dass das Bauteil durch bloßes Außereingriffbringen der mindestens zwei Rahmenteile von dem Halterahmen lösbar ist.

Das Bauteil mit dem Halterahmen kann auch weitere strukturellen Merkmale aufweisen, die sich aus dem vorausgehend beschriebenen Herstellungsverfahren des Bauteils und der Mitausbildung des Halterahmens ergeben.

Eine Maschine kann derart ausgebildet und eingerichtet sein, dass von ihr wenigstens ein dreidimensionales Bauteil in einer Baubox durch sukzessives schichtweises selektives Verfestigen eines Partikelmaterials gemäß dem wie hierin beschriebenen Verfahren herstellbar ist, wobei die Maschine ferner eine Bauteil-Entnahmevorrichtung zum automatischen Entnehmen des jeweiligen fertigausgebildeten Bauteils aus der Baubox aufweist, wobei die Bauteil-Entnahmevorrichtung eine Greifvorrichtung aufweist, welche derart ausgebildet und eingerichtet ist, dass von der Greifvorrichtung der dem jeweiligen Bauteil zugeordnete Halterahmen (es können wie oben erläutert auch mehrere Bauteil einem selben Halterahmen zugeordnet sein) ergreifbar und dieser Halterahmen zusammen dem daran abgestützten Bauteil (oder den daran abgestützten Bauteilen) aus der Baubox entnehmbar ist, ohne dass das Bauteil direkt mechanisch ergriffen wird.

Das Bauteil mit Halterahmen kann z.B. in der wie oben beschriebenen Weise hergestellt und ausgebildet sein. Die Maschine kann hierzu aufweisen, eine in die Baubox hinein absenkbare Plattform, eine Partikelmaterialzuführvorrichtung zum wiederholten schichtweisen Aufbringen von losem Partikelmaterial auf die Plattform, eine Absenkvorrichtung zum jeweilgen Absenken der Plattform um eine Schicktdicke nach dem jeweiligen Aufbringen einer Partikelschicht, ein Verfestigungsvorrichtung zum gesteuerten selektiven Verfestigen des Partikelmaterials einer jeweiligen Schicht und eine Steuervorrichtung, von welcher die Verfestigungsvorrichtung gemäß einer vorgegebenen dreidimensionalen Form für das Bauteil angesteuert wird. Die Verfestigungsvorrichtung kann eine Bindermittelzuführvorrichtung aufweisen zum gesteuert selektiven Zuführen von Bindermittel zu den zu verfestigenden Partikelbereichen der jeweiligen Partikelmaterialschicht, oder kann eine Laservorrichtung oder eine Elektronenstrahl-Vorrichtung aufweisen zum Zuführen eines Laserstrahl oder Elektronenstrahls auf die zu verfestigenden Bereiche der jeweiligen Schicht von losem Partikelmaterial. Die Steuervorrichtung ist derart eingerichtet, dass von ihr die Maschine derart gesteuert wird bzw. die Verfestigungsvorrichtung derart angesteuert wird, dass von der Maschine bzw. von der Verfestigungsvorrichtung beim Ausbilden des Bauteils der wie oben beschriebene Halterrahmen in der wie oben beschriebenen Weise durch entsprechendes gesteuertes selektives Verfestigen des losen Partikelmaterials pro loser Partikelmaterialschicht mitausgebildet wird.

Die Erfindung wird im Folgenden anhand von bevorzugten Ausführungsbeispielen mit Bezugnahme auf die Zeichnung erläutert. In der Zeichnung zeigen:

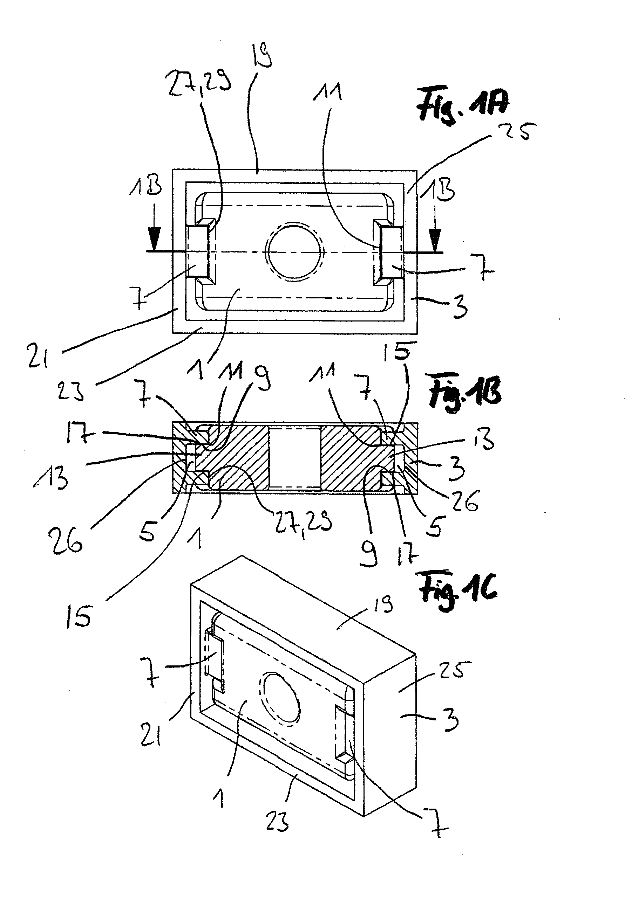

Figuren 1A-1C eine Draufsicht, eine Schnittansicht entlang der in Figur 1A mit 1B-1B bezeichneten Linie und eine perspektivische Ansicht eines Bauteils mit Halterahmen gemäß einer Ausführungsform der Erfindung, hergestellt durch sukzessives schichtweises selektives Verfestigen eines losen Partikelmaterials,

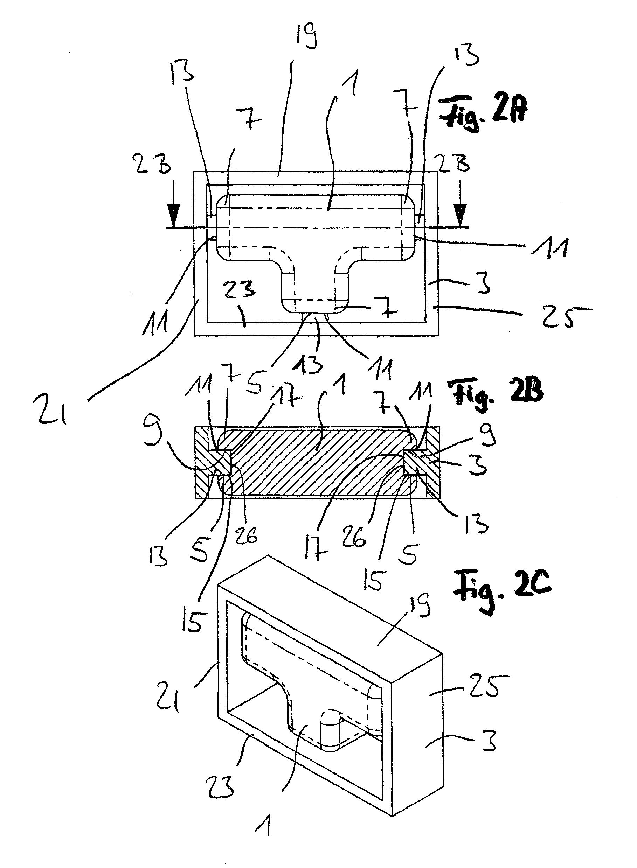

Figuren 2A-2C eine Draufsicht, eine Schnittansicht entlang der in Figur 2A mit 2B-2B bezeichneten Linie und eine perspektivische Ansicht eines Bauteils mit Halterahmen gemäß einer Ausführungsform der Erfindung, hergestellt durch sukzessives schichtweises selektives Verfestigen eines losen Partikelmaterials

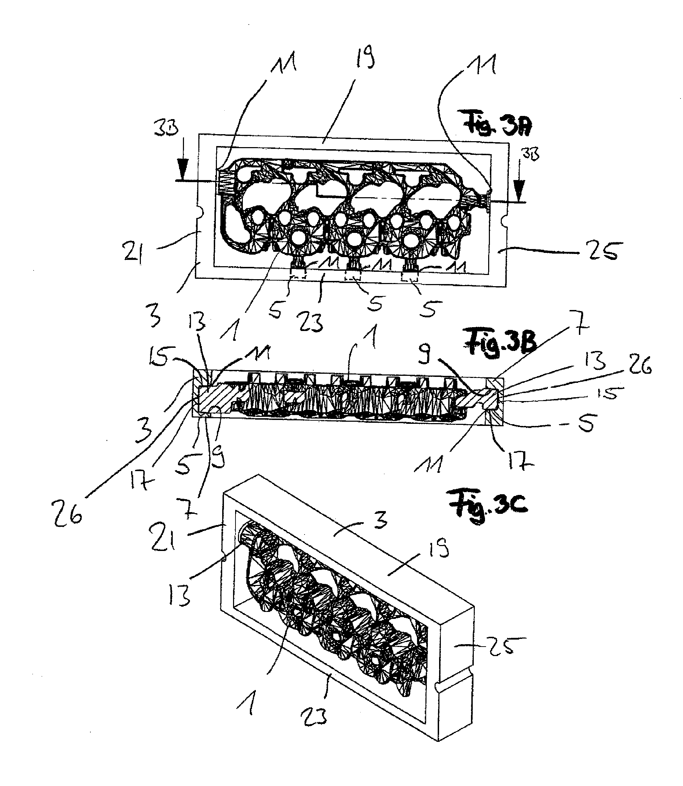

Figuren 3A-3C eine Draufsicht, eine Schnittansicht entlang der in Figur 3A mit 3B-3B bezeichneten Linie und eine perspektivische Ansicht eines Bauteils mit Halterahmen gemäß einer Ausführungsform der Erfindung, hergestellt durch sukzessives schichtweises selektives Verfestigen eines losen Partikelmaterials,

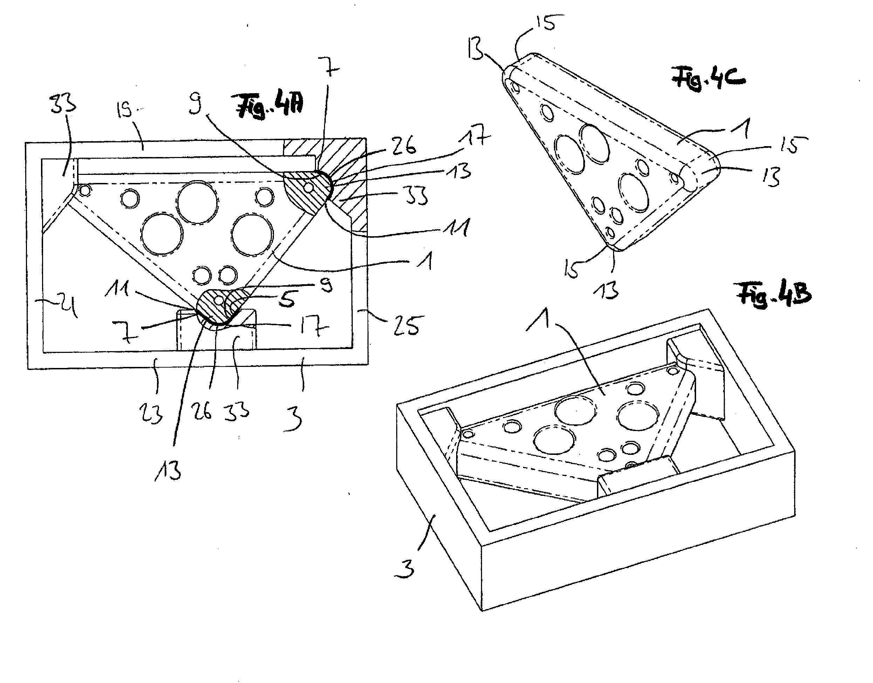

Figuren 4A-4C eine teilweise aufgeschnittene Draufsicht bzw. eine perspektivische Ansicht eines Bauteils mit Halterahmen gemäß einer Ausführungsform der Erfindung, hergestellt durch sukzessives schichtweises selektives Verfestigen eines losen Partikelmaterials, bzw. eine perspektivische Ansicht des aus dem Halterahmen entnommene Bauteils,

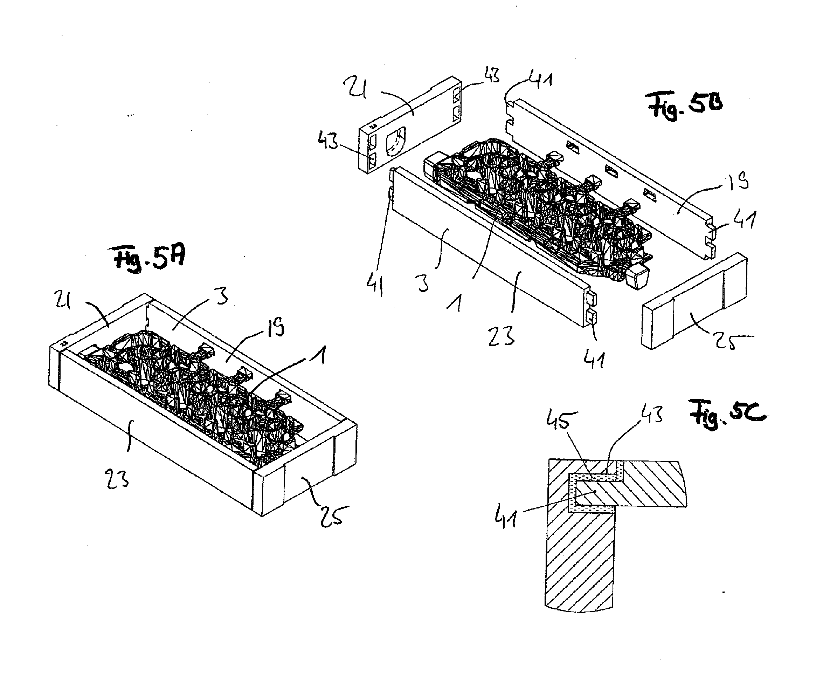

Figuren 5A-5C eine perspektivische Ansicht eines Bauteils mit Halterahmen gemäß einer Ausführungsform der Erfindung, hergestellt durch sukzessives schichtweises selektives Verfestigen eines losen Partikelmaterials, eine Explosionsansicht des Bauteils mit Halterrahmen von Fig. 5A bzw. eine schematische Schnittdarstellung einer Verbindung zwischen dem Bauteil und dem Halterrahmen von Fig. 5A,

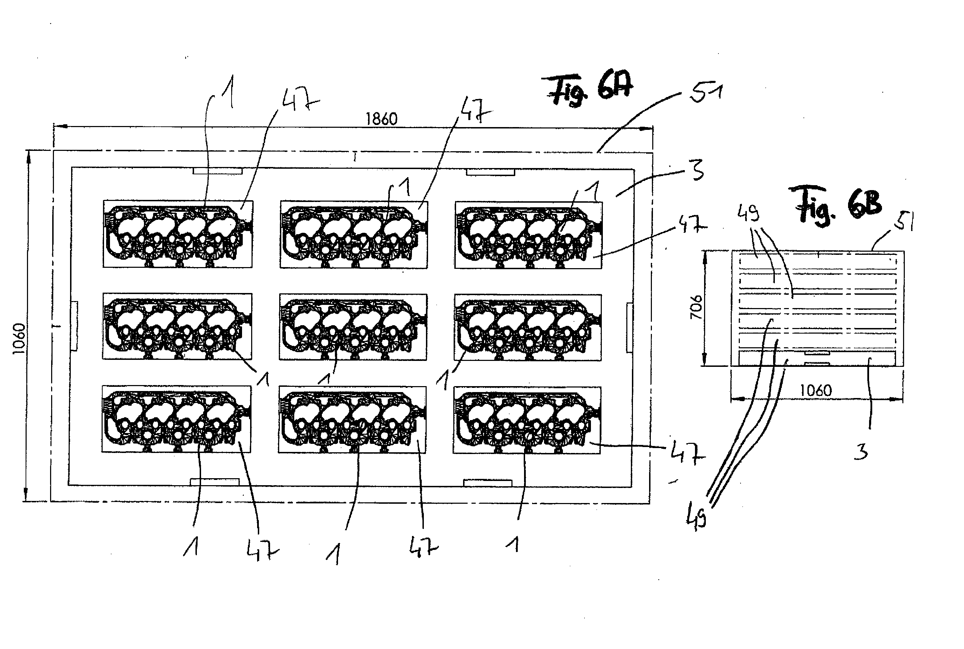

Figuren 6A und 6B eine Draufsicht und eine verkleinerte Seitenansicht auf eine Baubox mit einer Mehrzahl von Schichtgruppen aus einem Halterahmen und daran abgestützten Bauteilen gemäß einer Ausführungsform der Erfindung,

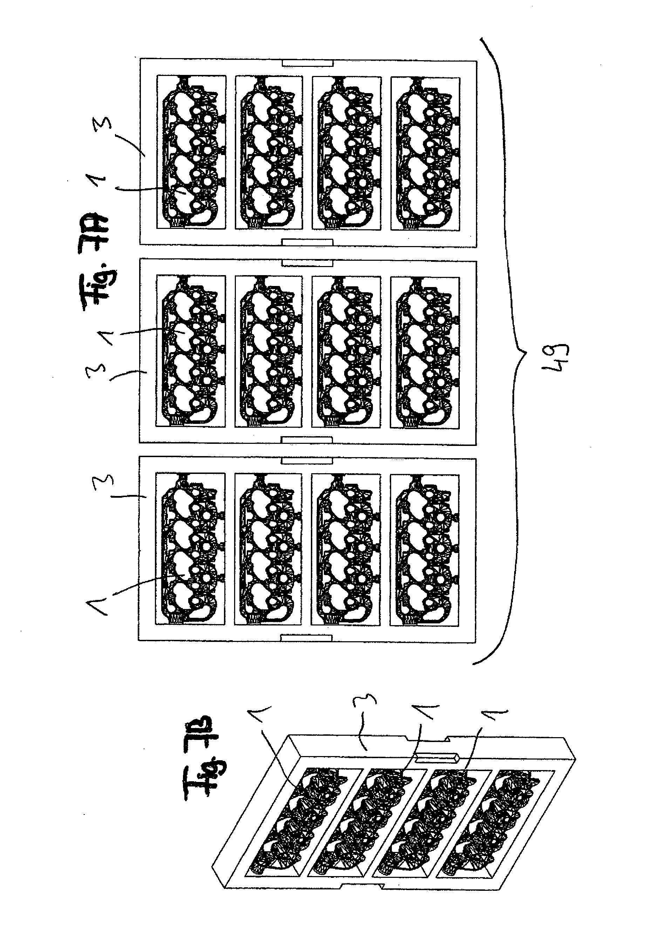

Figuren 7A und 7B eine Draufsicht auf eine Schichtgruppe mit drei voneinander (stofflich) separaten, nebeneinanderliegenden Halterahmen, in denen jeweils vier Bauteile abgestützt sind, gemäß einer Ausführungsform der Erfindung bzw. eine perspektivische Ansicht eines Halterahmens mit darin abgestützten Bauteilen dieser Schichtgruppe,

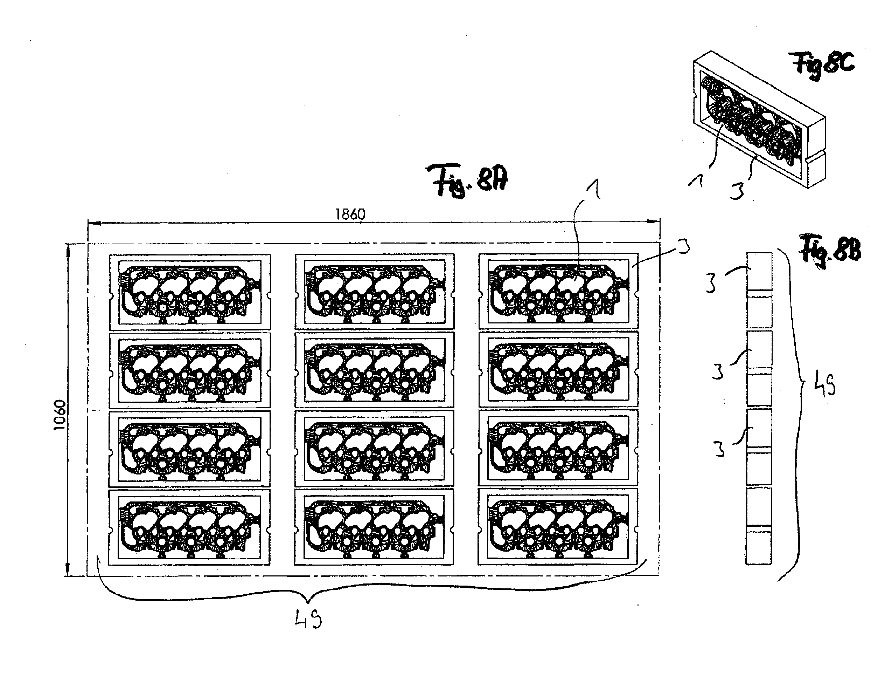

Figuren 8A-8C eine Draufsicht auf eine Schichtgruppe mit zwölf voneinander (stofflich) separaten, horizontal nebeneinanderliegenden Halterrahmen mit jeweils genau einem zugeordneten, darin abgestützten Bauteil, gemäß einer Ausführungsform der Erfindung bzw. eine Seitenansicht dieser Schichtgruppe bzw. eine perspektivische Ansicht eines Halterahmens mit darin abgestütztem Bauteil aus dieser Schichtgruppe,

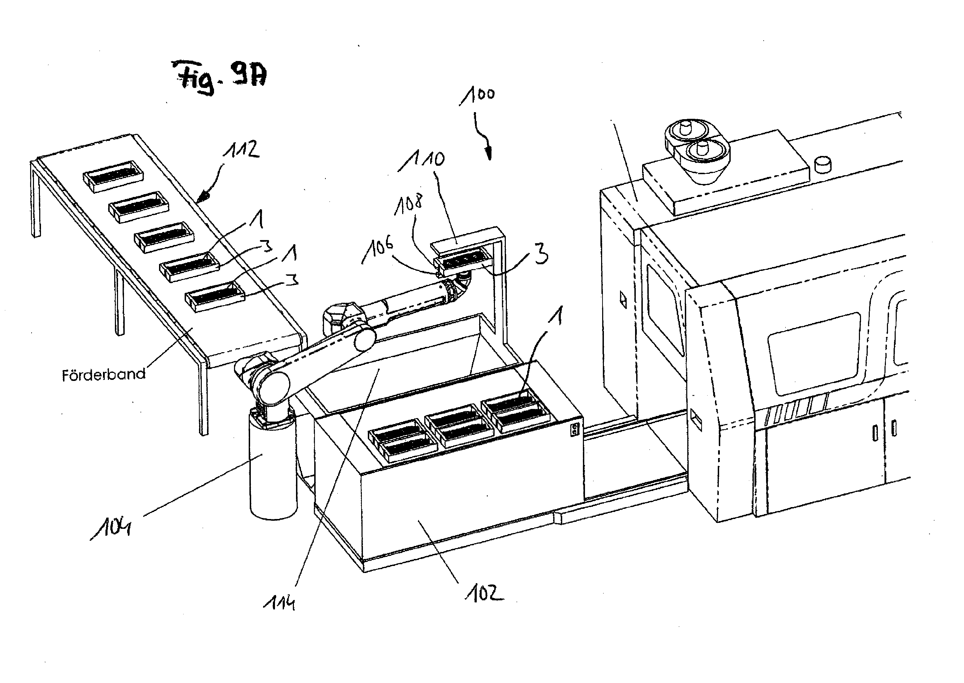

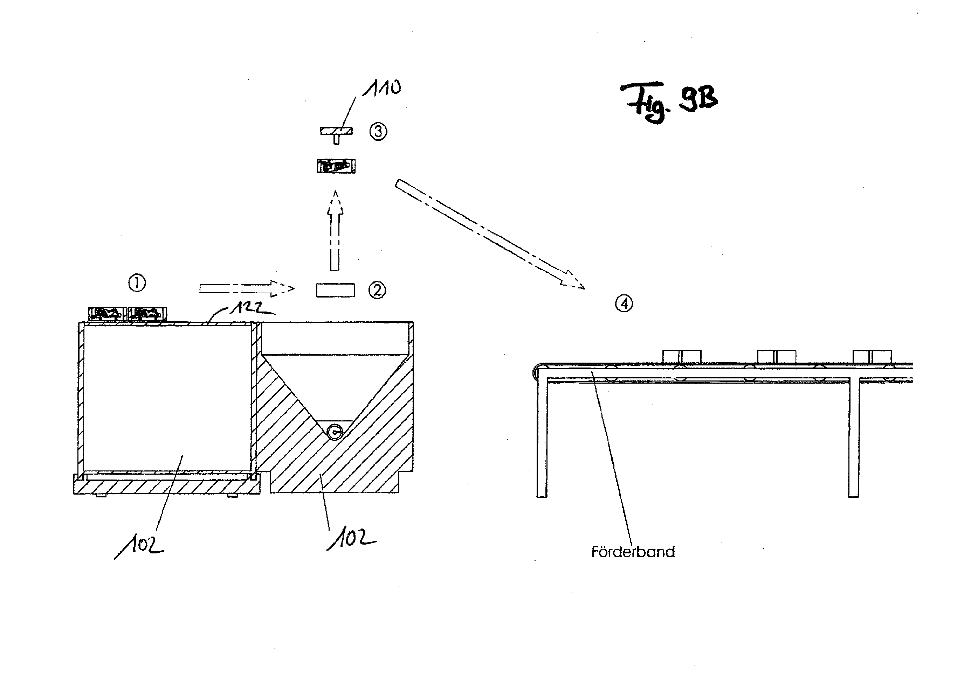

Figuren 9A und 9B eine Maschine in perspektivischer bzw. in teilweise geschnittener Seitenansicht,

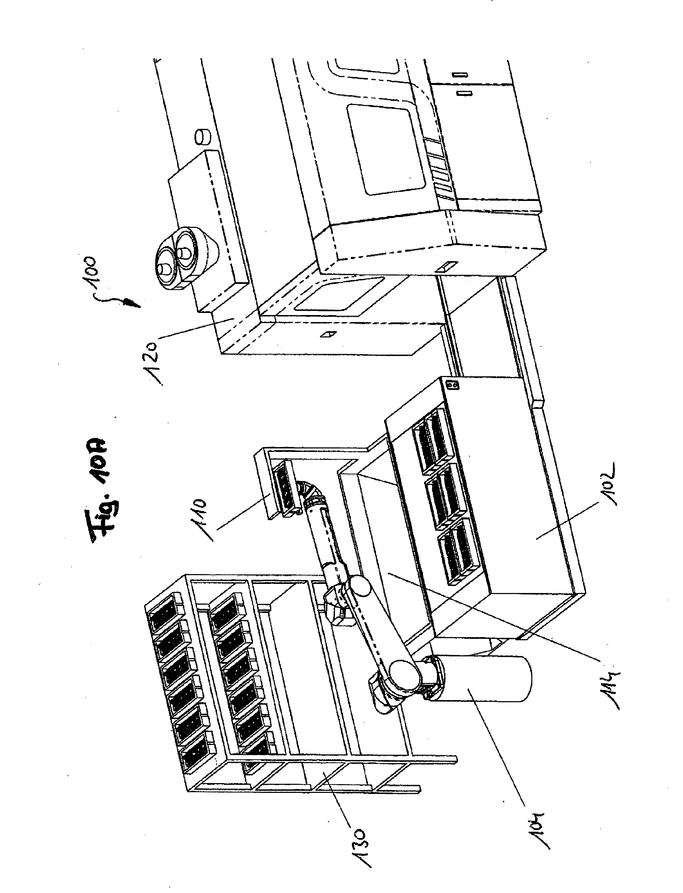

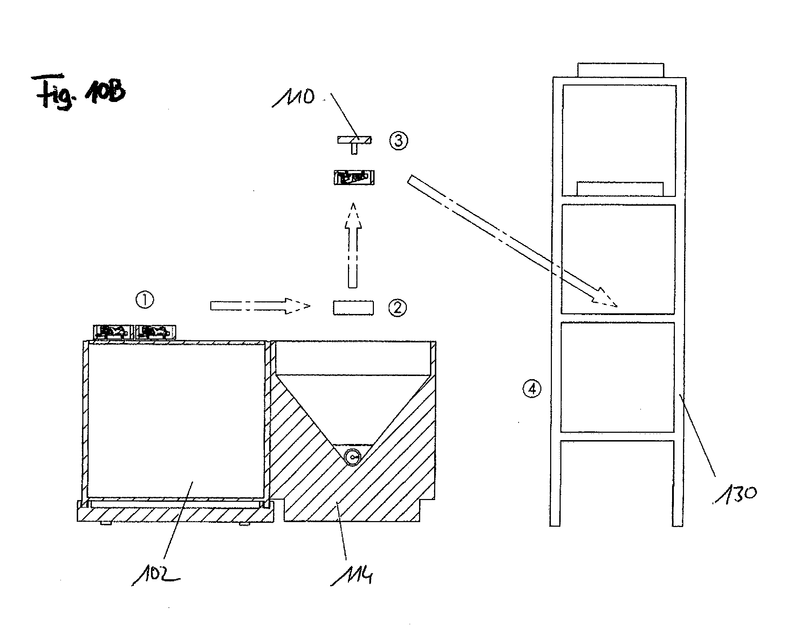

Figuren 10A und 10B eine Maschine in perspektivischer bzw. in teilweise geschnittener Seitenansicht,

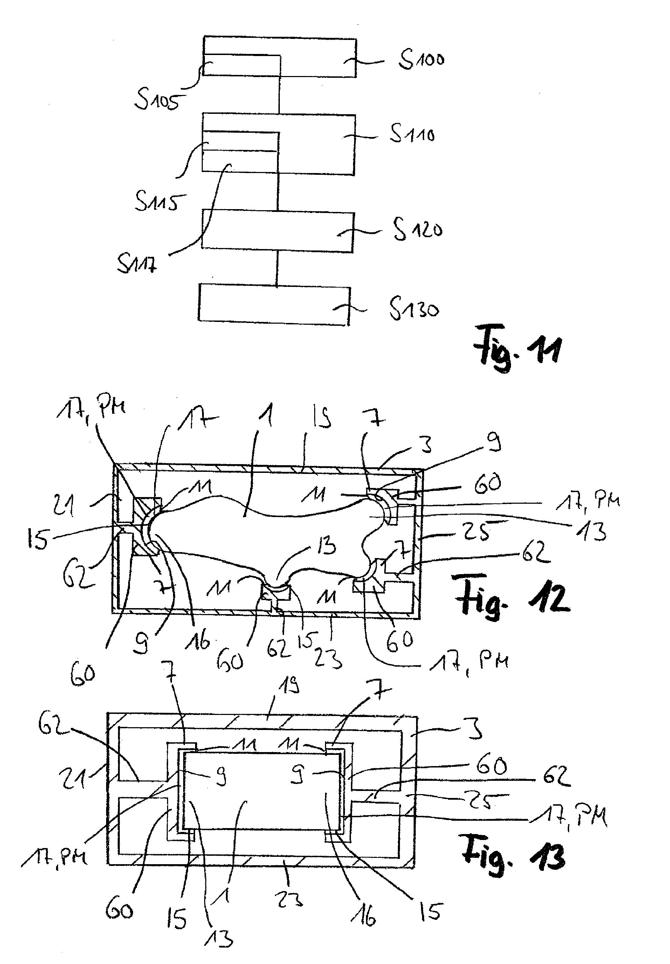

Figur 11 ein schematisches Flussablaufdiagram eines Verfahren gemäß einer Ausführungsform der Erfindung,
Figur 12 eine Schnittansicht einer weiteren Ausführungsform der Erfindung eines Bauteils mit Halterahmen, hergestellt durch sukzessives schichtweises selektives Verfestigen eines (zunächst) losen Partikelmaterials, und
Figur 13 eine Schnittansicht einer weiteren Ausführungsform der Erfindung eines Bauteils mit Halterahmen, hergestellt durch sukzessives schichtweises selektives Verfestigen eines (zunächst) losen Partikelmaterials.

In den Figuren werden für gleiche Merkmale die gleichen Bezugszeichen verwendet.

Mit Bezug auf die Figuren 1A bis 1C weist ein dreidimensionales Bauteil 1 mit Halterahmen 3, welche gemeinsam hergestellt sind durch sukzessives schichtweises selektives Verfestigen eines losen Partikelmaterials, wobei der Halterahmen 3 eine Mehrzahl (in diesem Falle zwei) von Halteräumen 5 aufweist, welche jeweils eine den jeweiligen Halteraum 5 ringförmig, hier komplett, umgebende Halteraumwand 7 (Ringwand) aufweisen, welche eine ringförmige, hier geschlossen ringförmige, Halteraum-Innenkontur 9 und eine (ringförmige) Halteraumöffnung 11 definiert, wobei in die Halteräume 5 eine entsprechende Mehrzahl (hier zwei) von am Bauteil 1 ausgebildeten Halteabschnitten 13 mit einer der Halteraum-Innenkontur 9 radial gegenüberliegenden Halteabschnitt-Außenkontur 15 über die zugehörige Halteraumöffnung 11 eingreifen, wobei die jeweilige Halteabschnitt-Außenkontur 15 umfänglich zu der jeweiligen Halteraum-Innenkontur 9 im Wesentlichen konform ausgebildet ist, wobei die Halteraum-Innenkontur 9 und die Halteabschnitt-Außenkontur 15 jeweils in einem geringen Abstand zueinander angeordnet sind, wodurch zwischen der Halteraum-Innenkontur 9 und der Halteabschnitt-Außenkontur 15 ein ringförmiger Spalt 17 vorliegt, in welchem nicht-verfestigtes und damit loses Partikelmaterial im Kontakt mit der Halteraum-Innenkontur 9 und der Haltestück-Außenkontur 15 vorliegt, über welches das Bauteil 1 spielfrei am Halterahmen 3 abgestützt ist.

Der Halterahmen 3 ist in dieser Ausführungsform ein geschlossener Rahmen in Rechteckform, in welchem das Bauteil 1 im Wesentlichen zentral aufgenommen ist. Der Halterahmen 3 weist demgemäß vier Rahmenteile in Form von Rahmenleisten 19, 21, 23, 25 auf, wobei die Halteräume 5 bzw. deren umfängliche Halteraumwände 7 von jeweils einem hohlen, hier hohlzylinderförmigen, Zapfen gebildet wird, wobei sich die Zapfen von den beiden einander gegenüberliegenden kürzeren Rahmenleisten 21, 25 des Halterahmen 3 aus nach innen in Richtung zum Bauteil 1 hin erstrecken.

Die Halteabschnitte 13 sind in dieser Ausführungsform an einander entgegengesetzten Endabschnitten des Bauteils 1 in Form von Vorsprungzapfen am Bauteil 1 angeformt, welche über die Halteraumöffnung 11 in den jeweils zugeordneten Halteraum 5 eingreifen. Der jeweilige Halteraum 5 ist ferner an seiner von der Halteraumöffnung 11 abgewandten Endseite von einem von der zughörigen Halterahmenleiste 21, 25 gebildeten Halteraumboden 26 abgeschlossen, welcher von der Halteraumwand 7 umgeben wird. Damit ist der Halteraum 5 in diesem Falle in Form einer Mulde ausgebildet.

Die jeweilige Halteraumwand 5 ist an ihrem dem Bauteil 1 zugewandten Stirnende mit einer planen Stirnfläche 27 ausgebildet, welche in einem engen Abstand zu einer ringförmigen, stirnseitigen Gegenfläche 29 des Bauteils 1 angeordnet ist, wobei auch zwischen dieser Stirnfläche 27 und der Gegenfläche 29 loses Partikelmaterial vorliegt, über welches das Bauteil 1 axial gegen den Halterahmen 3 abgestützt ist.

Weiteres loses Partikelmaterial, dass sich im Rahmen der Ausbildung des Bauteils 1 und des Halterahmens 3 zwischen dem Halterahmen 3 und dem Bauteil 1 gesammelt hat, ist entfernt.

Bei der in den Figuren 2A bis 2C gezeigten Ausführungsform eines Bauteils 1 mit Halterahmen 3, welche gemeinsam hergestellt wurden durch sukzessives schichtweises selektives Verfestigen eines (zunächst) losen Partikelmaterials, ist das Bauteil 1 im bzw. Halterahmen 3 indirekt abgestützt, und zwar über zwischenliegendes loses Partikelmaterial, wobei hierzu in dem Bauteil 1 drei muldenförmige Halteräume 5 ausgebildet sind. Zwei der Halteräume 5 sind an einander entgegengesetzten Endabschnitten des Bauteils 1 angeordnet, wobei die (ringförmigen) Halteraumöffnungen 11 dieser beiden Halteräume 5 in entsprechend entgegengesetzte Richtungen vom Bauteil 1 wegweisen. Der dritte Halteraum 5 ist an einem Mittelabschnitt des Bauteils 1 zwischen den beiden Endabschnitten des Bauteils 1 angeordnet, wobei die Halteraumöffnung 11 des dritten Halteraums 5 in Richtung senkrecht zu den Halteraumöffnungen 11 der beiden erstgenannten Halteräume 5 vom Bauteil 1 wegweist.

Die muldenförmigen Halteräume 5 sind jeweils von einer umfänglichen Halteraumwand 7 ringförmig komplett umgeben bzw. definiert sowie bauteilseitig von einem Halteraumboden 26 begrenzt, der von der Halteraumwand 7 komplett umgeben ist. Die Halteräume 5 weisen damit jeweils eine dreidimensionale kalottenartige Halteraum-Innenkontur 9 auf, welche in diesem Falle eine hohlzylindrische Topfgestalt mit kreisförmigem Querschnitt hat.

In die muldenförmigen Halteräume 5 greifen am Halterahmen 3 als zapfenartige Vorsprünge ausgebildete Halteabschitte 13 über die Halteraumöffnungen 11 ein. Die den Halteräumen 5 jeweils zugeordneten Halteabschnitte 13 haben eine zu der kalottenartigen Halteraum-Innenkontur 9 konforme Halteabschnitt-Außenkontur 15, sodass als Spalt 17 zwischen der Halteabschnitt-Innenkontur 9 und der Halteabschnitt-Außenkontur 15 ein kappenartiger Spalt 17 vorliegt, in welchem nicht-verfestigtes und damit loses Partikelmaterial im Kontakt mit der Halteraum-Innenkontur 9 und der Halteabschnitt-Außenkontur 15 vorliegt.

Über das im jeweiligen Spalt 17 vorliegende lose Partikelmaterial wird eine spielfrei indirekte Abstützung des Bauteils 1 am Halterahmen 3 erzielt.

Der Halterahmen 3 ist wie anhand von Figuren 1A bis 1C beschrieben als Rechteckrahmen mit vier Rahmenleisten 19, 21, 23, 25 ausgebildet.

Die Figuren 3A bis 3C zeigen eine Ausführungsform eines Bauteils 1 mit Halterahmen 3, welche gemeinsam hergestellt wurden durch sukzessives schichtweises selektives Verfestigen eines losen Partikelmaterials, wobei der Halterahmen 3 als geschlossener Rahmen von Halterahmenleisten 19, 21,23, 25, hier vier Halterahmenleisten, gebildet wird.

In den Halterahmenleisten 19, 21, 23, 25, genauer gesagt in drei der vier Halterahmenleisten, sind Halteräume 5 (hier fünf Halteräume) in Form von muldenartigen Vertiefungen ausgebildet, wobei das Bauteil 1 mit in diese Halteräume 5 eingreifenden Halteabschnitten 13 ausgebildet ist, hier in Form von Haltevorsprüngen.

Die Halteräume 5 haben jeweils eine kalottenartige Halteraum-Innenkontur 9, hier in einer zylindrischen Topfgestalt, wobei die Halteräume 5 jeweils von einer ringförmigen Halteraumwand 7 umgeben sind, welche auch einen Halteraumboden 26 umgibt, der bezüglich einer Halteraumöffnung 11 an einem entgegengesetzten Ende des Halteraums 5 angeordnet ist.

Die den Halteräumen 5 jeweils zugeordneten Halteabschnitte 13 haben eine zu der kalottenartigen Halteraum-Innenkontur 9 konforme Halteabschnitt-Außenkontur 15, hier in Form eines Zylinderzapfens, sodass als Spalt 17 zwischen der Halteabschnitt-Innenkontur 9 und der Halteabschnitt-Außenkontur 15 ein kappenartiger Spalt 17 vorliegt, in welchem nicht-verfestigtes und damit loses Partikelmaterial im Kontakt mit der Halteraum-Innenkontur 9 und der Halteabschnitt-Außenkontur 15 vorliegt. Dadurch ist das Bauteil 1 über das Partikelmaterial im jeweiligen Spalt 17 indirekt am Halterahmen 3 abgestützt.

Zwei der Halteräume 5 liegen an entgegengesetzten Endabschnitten des Bauteils 1, wobei die Halteraumöffnungen 11 zum Bauteil 1 hin in einander zugewandte Richtungen weisen. Dementsprechend erstrecken sich die diesen beiden Halteräumen 5 zugeordnete Halteabschnitte 13 an den beiden entgegengesetzten Endabschnitten des Bauteils 1 vom Bauteil 1 aus in entgegengesetzte Richtungen weg.

Drei der Halteräume 5 sind in einem Mittelabschnitt zwischen den beiden Endabschnitten angeordnet und erstrecken sich mit ihren (ringförmigen) Halteraumöffnungen 11 senkrecht zu den Halteraumöffnungen 11 der beiden erstgenannten Halteraumöffnungen 11, wobei die drei (mittleren) Halteraumöffnungen 11 ebenfalls zum Bauteil 1 hin gewandt sind. Dementsprechend erstrecken sich die diesen drei Halteräumen 5 zugeordneten Halteabschnitte 13 vom Mittelabschnitt des Bauteils 1 aus weg in die gleiche Richtung zum Halterahmen 3 hin.

Die Figuren 4A bis 4C zeigen eine Ausführungsform eines Bauteils 1 mit Halterahmen 3, welche gemeinsam hergestellt wurden durch sukzessives schichtweises selektives Verfestigen eines losen Partikelmaterials, wobei der Halterahmen 3 als geschlossener Rahmen von Halterahmenleisten 19, 21,23, 25, hier vier Halterahmenleisten, gebildet wird.

An dem Halterahmen 3 sind an dessen Innenseite Verdickungen oder Vorsprünge 33 angeformt, in welche jeweils ein muldenförmiger Halteraum 5 eingeformt ist, welcher eine gewölbte kalottenförmige Halteraum-Innenkontur 9 aufweist, die von einem Halteraumboden 26 und einer den Halteraum 5 und den Halteraumboden 26 rings umgebenden Halteraumwand 7 begrenzt wird.

In den jeweiligen Halteraum 5 greift ein vom Bauteil 1 ausgebildeter Halteabschnitt 13 über die (ringförmige) Halteraumöffnung 11 ein. Die Halteabschnitte 13 haben eine zu der kalottenartigen Aufnahmeraum-Innenkontur 9 konforme Halteabschnitt-Außenkontur 15, welche in einem geringen Abstand zu der Halteraum-Innenkontur 9 verläuft, sodass zwischen der Halteraum-Innenkontur 9 und der Halteabschnitt-Außenkontur 15 ein schmaler Spalt 17 erzeugt ist. In diesem Spalt 17 befindet sich nicht-verfestigtes und damit loses Partikelmaterial im Kontakt mit der Halteraum-Innenkontur 9 und der Halteabschnitt-Außenkontur 15, sodass das Bauteil 1 indirekt über das im Spalt 17 vorliegende Partikelmaterial spielfrei am Halterahmen 1 abgestützt ist.

Die Anordnung der Halteräume 5 ist derart, dass diese ein Dreieck aufspannen. Damit ist das Bauteil 1 in alle Richtungen spiel- und bewegungsfrei bezüglich des Halterahmens 3 abgestützt.

Die Figuren 5A bis 5C zeigen eine Abwandlung der in den Figuren 3A bis 3C gezeigten Ausführungsform. Es werden anschließend nur die Unterschiede beschrieben, wobei ansonsten im Hinblick auf die Struktur der Ausführungsform der Figuren 5A bis 5C auf die obige Beschreibung der Ausführungsform der Figuren 3A bis 3C verwiesen wird.

Bei der Ausführungsform nach den Figuren 3A bis 3C war der Halterahmen 3 als stofflich einstückiges Bauteil dargestellt. Bei der in den Figuren 5A bis 5C gezeigten Ausführungsform sind die vier Rahmenleisten 19, 21, 23, 25 voneinander stofflich separate Rahmenleisten, welche über Steckverbindungen, die von an den Rahmenleisten 19, 21, 23, 25 ausgebildeten Rahmen-Zapfen 41 und Rahmen-Ausnehmungen 43 gebildet werden, miteinander lösbar verbunden sind.

Diese Steckverbindungen werden ähnlich wie die Verbindungen zwischen den Halteabschnitten 13 und den Halteräumen 5 dadurch ausgebildet, dass die Rahmenzapfen 41 und die Rahmen-Ausnehmungen 43 mit zueinander konformen Außen- bzw. Innenkonturen ausgebildet werden, die in einem geringen Abstand zueinander verlaufen, sodass ein enger Verbindungsspalt 45 dazwischen vorliegt, in welchem nicht-verfestigtes und damit loses Partikelmaterial vorliegt, sodass die Rahmenleisten oder Rahmenteile 19, 21, 23, 25 über das in den Verbindungspalten 45 zwischenliegende lose Partikelmaterial indirekt spielfrei aneinander abgestützt sind.

Die Rahmen-Zapfen 41 und die Rahmen-Ausnehmungen 43 werden ebenfalls beim Ausbilden des Bauteils im Zusammenhang mit dem Mitausbilden des Rahmens durch (gesteuert) selektives schichtweises Verfestigen des losen Partikelmaterials mitausgebildet.

Eine Greifvorrichtung ist z.B. derart eingerichtet, dass von ihr der Halterahmen 3 derart ergreifbar ist, dass die (Steck-)Verbindungen im Eingriff gehalten bleiben. Sobald die Greifvorrichtung den Halterahmen 3 loslässt, können die Halterahmenteile, z.B. die in Figuren 5A bis 5C gezeigten Halterahmenleisten 19, 21, 23, 25, leicht voneinander getrennt werden, um dadurch das Bauteil 1 aus seiner Abstützung am Halterahmen 3 zu lösen.

Bei den bisher beschriebenen Ausführungsformen war dem jeweiligen Bauteil 1 ein jeweiliger Halterahmen individuell zugeordnet.

Die Figuren 6A und 6B zeigen eine Ausführungsform der Erfindung wonach mehrere Bauteile 1 einem einzigen Halterahmen 3 zugeordnet sind und in diesem wie in der oben beschriebenen Weise indirekt über das lose Partikelmaterial spielfrei am Halterahmen 3 abgestützt sind. Die Bauteile 1 von Figuren 6A und 6B entsprechen den Bauteilen 1 von Figuren 3A-3C und 5A-5C und sind entsprechend am Halterahmen 3 abgestützt, in welchem hierzu eine der Anzahl der Bauteile 1 entsprechende Anzahl von Ausnehmungen 47 ausgebildet sind, in welchen das jeweilige Bauteil 1 angeordnet ist.

Der Halterahmen 3 mit den darin spielfrei und indirekt abgestützten Bauteilen 1 bildet eine Schichtgruppe 49 in einem Stapel (siehe Figur 6B) von entsprechend ausgebildeten Schichtgruppen 49, die sukzessive übereinander durch sukzessives schichtweises selektives verfestigen von losem Partikelmaterial ausgebildet wurden.

In den Figuren 6A und 6B sind die Schichtgruppen 49 in einer Baubox oder Jobbox 51 befindlich dargestellt, in welcher sie ausgebildet wurden und aus welcher sie schichtgruppenweise durch Ergreifen am jeweiligen Halterahmen 3 entnehmbar sind.

Innerhalb der jeweiligen Schichtgruppe 49 sind die Bauteile 1 horizontal nebeneinanderliegende angeordnet und zwar in einem 3x3-Feldmuster

Die Figuren 7A und 7B zeigen eine zu den Figuren 6A und 6B ähnliche Ausführungsform, wobei jedoch eine jeweilige Schichtgruppe 49 von mehreren, hier drei, voneinander (stofflich) separaten und horizontal nebeneinander angeordneten Halterahmen 3 gebildet wird, in welchen jeweils eine Mehrzahl von Bauteilen 1, hier vier Bauteile 1, in der wie oben beschriebenen Weise abgestützt ist.

Die Figuren 8A bis 8C zeigen eine zu den Figuren 6A bis 7B ähnliche Ausführungsform, wobei jedoch eine jeweilige Schichtgruppe 49 von einer Mehrzahl, hier zwölf, voneinander (stofflich) unabhängigen Halterahmen 3 gebildet ist, in welchen jeweils ein Bauteil 1 individuell in der wie oben beschriebene Weise abgestützt ist. In der jeweiligen Schichtgruppe 49 liegen die Halterahme 3 horizontal nebeneinander in einem 3x4-Feldmuster.

Die Figuren 9A und 9B zeigen eine Maschine 100 zur Herstellung und Handhabung von dreidimensionalen Bauteilen 1, wobei die Maschine 1 derart ausgebildet und eingerichtet ist, dass von ihr dreidimensionale Bauteile 1 in einer Baubox oder Jobbox 102 durch sukzessives schichtweises selektives Verfestigen eines Partikelmaterials gemäß dem wie hierin beschriebenen Verfahren herstellbar ist, wobei die Maschine 100 ferner eine Bauteil-Entnahmevorrichtung 104, hier in Form eines Roboterarms, zum automatischen Entnehmen des jeweiligen fertigausgebildeten Bauteils 1 aus der Baubox 102 aufweist, wobei die Bauteil-Entnahmevorrichtung 104 eine Greifvorrichtung 106 aufweist, welche derart ausgebildet und eingerichtet ist, dass von der Greifvorrichtung 106 der dem jeweiligen Bauteil 1 zugeordnete Halterahmen 3 ergreifbar und dieser zusammen dem daran abgestützten Bauteil 1 oder den daran abgestützten Bauteilen 1 (vgl. Ausführungsformen von Figuren 6A bis 7B) aus der Baubox 192 entnehmbar ist, ohne dass das Bauteil 1 direkt mechanisch ergriffen wird.

Bei der in den Figuren 9A und 9B gezeigten Ausführungsform sind die Bauteile 1 und der Halterahmen 3 entsprechend der Ausführungsform von 5A-5C ausgebildet. Die Greifvorrichtung 106 hat zwei (automatisch) aufeinander zu und voneinander weg bewegbare Greifbacken 108 (nur einer davon ist dargestellt), von denen der jeweilige Halterahmen 3 dazwischen einklemmbar ist. Hierbei sind, wie aus Figuren 5A-5C ersichtlich ist, die Steckverbindungen der Rahmenteile 19, 21, 23, 25 derart gewählt, dass die Rahmenzapfen 41 sich an beiden Stirnenden der längeren Rahmenleisten 19, 23 befinden und sich in entgegengesetzte Längsrichtung nach außen erstrecken, um in die entsprechenden Rahmenausnehmungen 43 in den kürzeren Rahmenleisten 21, 25 eingreifen zu können. Damit kann durch zusammenpressen oder zusammenklemmen der beiden kürzeren Rahmenleisten 21, 25 aufeinander zu in Längsrichtung der beiden längeren Rahmenleisten 19, 23 (mittels der beiden Greifbacken 108) der Halterahmen 3 insgesamt sicher zusammengehalten werden, wodurch auch das darin abgestützte Bauteil 1 entsprechend sicher gehalten ist.

Gehalten von der Greifvorrichtung 106 ist der jeweilige Halterahmen 3 mit dem darin spielfrei abgestützten Bauteil 1 von der Bauteil-Entnahmevorrichtung 104 automatisch aus der Baubox 102 entnehmbar und einer Reinigungsvorrichtung 110, hier in Form eines Gebläses, zuführbar, von welcher restliches loses Partikelmaterial vom Bauteil 1 entfernt wird, wobei jedoch aufgrund der kappenartigen Gestalt des Spalts 17 das lose Partikelmaterial in dem Spalt 17 (siehe Figuren 3A-3C) geschützt verbleibt, sodass das Bauteil 1 auch nach dem Reinigungsvorgang über das sich in den Spalten 17 befindliche lose Partikelmaterial spielfrei am Halterahmen 3 abgestützt bleibt.

Die Bauteil-Entnahmevorrichtung 104 führt dann den Halterahmen 3 automatisch mit dem daran abgestützten Bauteil 1 einer neben der Maschine 100 angeordneten Fördervorrichtung 112 zu, hier in Form eines Förderbands, von welcher die Bauteile 1 mit ihrem Halterahmen 3 zur weiteren Handhabung automatisch weitertransportiert werden.

Unterhalb der Reinigungsvorrichtung 110 befindet sich eine Auffangwanne 114 zum Auffangen des von der Reinigungsvorrichtung 110 vom Bauteil 1 und vom Halterahmen 3 entfernten, losen Partikelmaterials.

Die Maschine 100 weist ferner eine Prozessstation 120 auf, welche z.B. in einer wie in der WO 2011/067301 beschriebenen Weise ausgebildet ist, um das schichtweise Aufbauen des dreidimensionalen Gegenstands durchzuführen.

Die Prozessstation 120 und damit die Maschine 100 können hierzu aufweisen: eine in die Baubox 102 hinein absenkbare Plattform 122, eine Partikelmaterialzuführvorrichtung (nicht im Einzelnen dargestellt) zum wiederholten schichtweisen Aufbringen von losem Partikelmaterial auf die Plattform 122, eine Absenkvorrichtung (nicht im Einzelnen dargestellt) zum jeweiligen Absenken der Plattform 122 um eine Schicktdicke nach dem jeweiligen Aufbringen einer Partikelschicht, eine Verfestigungsvorrichtung (nicht im Einzelnen dargestellt) zum gesteuerten selektiven Verfestigen des Partikelmaterials einer jeweiligen Schicht und eine Steuervorrichtung (nicht im Einzelnen dargestellt), von welcher die Verfestigungsvorrichtung gemäß einer vorgegebenen dreidimensionalen Form für das Bauteil bzw. für den Halterahmen angesteuert wird. Die Verfestigungsvorrichtung kann eine Bindermittelzuführvorrichtung aufweisen zum gesteuert selektiven Zuführen von Bindermittel zu den zu verfestigenden Partikelbereichen der jeweiligen Partikelmaterialschicht, oder kann eine Laservorrichtung oder eine Elektronenstrahl-Vorrichtung aufweisen zum Zuführen eines Laserstrahl oder Elektronenstrahls auf die zu verfestigenden Bereiche der jeweiligen Schicht von losem Partikelmaterial. Die Steuervorrichtung ist z.B. derart eingerichtet, dass von ihr die Maschine derart gesteuert wird bzw. die Verfestigungsvorrichtung derart angesteuert wird, dass von der Maschine bzw. von der Verfestigungsvorrichtung beim Ausbilden des Bauteils 1 der wie oben beschriebene Halterrahmen 3 in der wie oben beschriebenen Weise durch entsprechendes gesteuertes selektives Verfestigen des losen Partikelmaterials pro loser Partikelmaterialschicht mitausgebildet wird.

Die Figuren 10A bis 10B zeigen eine Maschine 100 die im Wesentlichen wie die in den Figuren 9A und 9B beschriebene Maschine ausgebildet ist, sodass im Hinblick auf die generelle Funktion und Struktur auf die vorausgehende Beschreibung der Ausführungsform von Figuren 9A bis 9B beschrieben wird. Im Unterschied zu der vorausgehenden Ausführungsform von Figuren 9A und 9B ist die Transportvorrichtung durch ein Regallager 130 ersetzt, welchem die Bauteil-Entnahmevorrichtung 104 die Bauteile 1 zusammen dem zugehörigen Halterahmen 3 automatisch zuführt, um diese darin bis zur weiteren Handhabung zwischenzulagern.

Figur 11 zeigt schematisch ein Flussablaufdiagramm eines Verfahrens zum automatischen Ausbilden eines dreidimensionalen Bauteils durch sukzessives schichtweises selektives Verfestigen eines losen Partikelmaterials gemäß einer Ausführungsform der Erfindung, wobei das Bauteil in einer Baubox ausgebildet wird (S100), wobei beim Ausbilden des dreidimensionalen Bauteils zusätzlich ein Halterahmen mitausgebildet (S105) wird, wobei der Halterahmen und/oder das Bauteil mit einer Mehrzahl von Halteräumen ausgebildet wird, welche jeweils eine den Halteraum ringförmig im Wesentlichen umgebende Halteraumwand aufweisen, welche eine ringförmige Halteraum-Innenkontur und eine Halteraumöffnung definiert, wobei in die Halteräume eine entsprechende Mehrzahl von am Bauteil und/oder am Halterahmen ausgebildeten Halteabschnitten mit einer Halteabschnitt-Außenkontur über die zugehörige Halteraumöffnung eingreifen, wobei die jeweilige Halteabschnitt-Außenkontur umfänglich zu der jeweiligen Halteraum-Innenkontur im Wesentlichen konform ausgebildet wird, wobei die Halteraum-Innenkontur und die Halteabschnitt-Außenkontur jeweils in einem geringen Abstand zueinander angeordnet werden, wodurch zwischen der Halteraum-Innenkontur und der Halteabschnitt-Außenkontur ein ringförmiger Spalt ausgebildet wird, wobei nicht verfestigtes Partikelmaterial außerhalb des jeweiligen Spalts von dem fertigausgebildeten Bauteil entfernt wird (S110), sodass in dem jeweiligen Spalt nicht-verfestigtes Partikelmaterial im Kontakt mit der Halteraum-Innenkontur und der Haltestück-Außenkontur verbleibt, sodass das Bauteil über das im jeweiligen Spalt verbleibende Partikelmaterial spielfrei am Halterahmen abgestützt bleibt.

Das Entfernen kann dadurch erfolgen, dass das Bauteil aus der Baubox automatisch entnommen wird (S115), indem der Halterahmen von einer Greifvorrichtung ergriffen und von dieser aus der Baubox entnommen wird, wodurch das am Halterahmen spielfrei abgestützte Bauteil mitentnommen wird, und dass das Bauteil von der Greifvorrichtung, welche den Halterahmen ergriffen hat, einer Reinigungsvorrichtung zugeführt (S117) wird, von welcher das noch anhaftende lose Partikelmaterial von dem Bauteil und vom Rahmen entfernt wird.

In einem nächsten Schritt (S120) wird das Bauteil, welches indirekt über den Halterahmen von der Greifvorrichtung ergriffen ist, automatisch z.B. einer Transportvorrichtung zum Weitertransport zugeführt oder in einem Regallager zur Zwischenlagerung abgelegt.

In einen weiteren Schritt (S130) kann das Bauteil automatisch von dem Halterahmen gelöst werden.

Bei den in den Figuren 12 und 13 gezeigten Ausführungsformen eines Bauteils 1 mit Halterahmen 3 sind die Halteräume 5 in Vorsprüngen 60 ausgebildet, die sich zunächst als schmale Stege 62 vom Halterahmen 3 bzw. von dessen Rahmenteilen 19, 21, 23, 25 ausgehend nach innen erstrecken und dann zu einer Kopfform verbreitert sind, in welchem Kopf der jeweilige Halteraum 5 muldenförmige bzw. kalottenartig ausgebildet ist, sodass sich ein kappenförmiger Spalt 17 zwischen einer Halteraum-Innenkontur 9 und einer dazu konformen Halteabschnitt-Außenkontur 15 eines Halterabschnitts 13 am Bauteil 1 ergibt, in welchem Spalt 17 (wie in den oben erläuterten Ausführungsformen) nicht verfestigtes Partikelmaterial PM verbleibt. Die Halteraumöffnung 11 des jeweiligen Halteraums 5 ist in geschlossener Ringform ausgebildet, definiert von dem dem Bauteil 1 zugewandten Stirnende der jeweiligen den zugehörigen Halteraum 5 rings umgrenzenden Halteraumwand 7.

In den angehängten Ansprüchen kann bei dem jeweils beanspruchten Verfahren (d.h. bei einem oder mehreren oder allen der Ansprüche 1 bis 9, z.B. bei dem Verfahren nach Anspruch 1) der jeweilige Spalt (17) mit einer Spaltweite von kleiner gleich 10 mm oder kleiner gleich 5 mm oder kleiner gleich 3 mm oder kleiner gleich 2 mm oder kleiner gleich 1 mm oder kleiner gleich 0,5 mm ausgebildet werden, wobei die Spaltweite des jeweiligen Spalts (17) konstant ist oder variiert.

Zusätzlich oder alternativ kann in den angehängten Ansprüchen bei dem jeweils beanspruchten Verfahren das Bauteil (1) nicht stoffschlüssig (oder stoffschlussfrei) mit dem Halterahmen (3) verbunden sein.

Zusätzlich oder alternativ kann in den angehängten Ansprüchen bei dem jeweils beanspruchten Verfahren das Bauteil (1) in einer Baubox (102) ausgebildet werden, mit welcher weder der Halterahmen (3) noch das Bauteil (1) stoffschlüssig verbunden werden.

Zusätzlich oder alternativ kann in den angehängten Ansprüchen bei dem jeweils beanspruchten Verfahren in einer/der Baubox (102) eine Mehrzahl von voneinander separaten Bauteilen (1) in der wie in einem der anderen Ansprüche beschriebenen Weise ausgebildet werden, wobei die zugehörigen Halterahmen (3) ebenfalls separat voneinander ausgebildet werden.

Zusätzlich oder alternativ kann in den angehängten Ansprüchen bei dem jeweils beanspruchten Verfahren das jeweilige fertigausgebildete Bauteil (1) indirekt durch direktes Ergreifen seines zugeordneten Halterahmens (3) ergriffen werden, um es dadurch durch Entnehmen des Halterahmens (1) aus der Baubox (102) mit dem Halterahmen (3) zusammen aus der Baubox (102) mitzuentnehmen.

In den angehängten Ansprüchen kann bei dem jeweils beanspruchten Bauteil mit Halterahmen (d.h. bei einem oder mehreren oder allen der Ansprüche 10 bis 14, z.B. bei dem Bauteil mit Halterahmen nach Anspruch 10) der Halterahmen (3) als Rahmenschenkel oder Rahmenleisten (19, 21, 23, 24) aufweisend ausgebildet sein, wobei einer, mehrere oder alle der Halteräume (5) in Form von Ausnehmungen oder Vertiefungen in den Rahmenschenkeln oder den Rahmenleisten (19, 21, 23, 25) ausgebildet sind.

Zusätzlich oder alternativ kann in den angehängten Ansprüchen bei dem jeweils beanspruchten Bauteil mit Halterahmen einer, mehrere oder alle der Halteabschnitte (13) am Halterahmen (39 und/oder am Bauteil (1) als Vorsprung oder als Vorsprünge ausgebildet sein.

Zusätzlich oder alternativ kann in den angehängten Ansprüchen bei dem jeweils beanspruchten Bauteil mit Halterahmen einer, mehrere oder alle der Halteräume (5) an Haltestegen (62) ausgebildet sein, die am Halterahmen (3) angeformt sind und die sich vom Halterahmen (3) aus in Richtung zum Bauteil (1) hin erstrecken.

Zusätzlich oder alternativ kann in den angehängten Ansprüchen bei dem jeweils beanspruchten Bauteil mit Halterahmen der jeweilige Spalt (17) mit einer Spaltweite von kleiner gleich 10 mm oder kleiner gleich 5 mm oder kleiner gleich 3 mm oder kleiner gleich 2 mm oder kleiner gleich 1 mm oder kleiner gleich 0,5 mm ausgebildet sein, wobei die Spaltweite des jeweiligen Spalts (17) konstant ist oder variiert.

Zusätzlich oder alternativ kann in den angehängten Ansprüchen bei dem jeweils beanspruchten Bauteil mit Halterahmen das Bauteil (1) nicht stoffschlüssig (oder stoffschlussfrei) mit dem Halterahmen (3) verbunden sein.

Obwohl die Erfindung vorausgehend anhand von speziellen Ausführungsbeispielen beschrieben wurde, ist die Erfindung nicht auf diese speziellen Ausführungsformen beschränkt, sondern umfasst auch Abwandlungen insofern von dem durch die Patentansprüche definierten Schutzumfang umfasst.

## Patentansprüche

1. Verfahren zum Ausbilden eines dreidimensionalen Bauteils (1) durch sukzessives schichtweises selektives Verfestigen eines losen Partikelmaterials (PM), wobei beim Ausbilden des dreidimensionalen Bauteils (1) zusätzlich ein Halterahmen (3) mitausgebildet wird, **dadurch gekennzeichnet daß** der Halterahmen (3) und/oder das Bauteil (1) mit einer Mehrzahl von Halteräumen (5) ausgebildet wird, welche jeweils eine den Halteraum (5) ringförmig im Wesentlichen umgebende Halteraumwand (7) aufweisen, welche eine ringförmige Halteraum-Innenkontur (9) und eine Halteraumöffnung (11) definiert, wobei in die Halteräume (5) eine entsprechende Mehrzahl von am Bauteil (1) und/oder am Halterahmen (3) ausgebildeten Halteabschnitten (13) mit einer Halteabschnitt-Außenkontur (15) über die zugehörige Halteraumöffnung (11) eingreifen, wobei die jeweilige Halteabschnitt-Außenkontur (15) umfänglich zu der jeweiligen Halteraum-Innenkontur (9) im Wesentlichen konform ausgebildet wird, wobei die Halteraum-Innenkontur (9) und die Halteabschnitt-Außenkontur (15) jeweils in einem geringen Abstand zueinander angeordnet werden, wodurch zwischen der Halteraum-Innenkontur (9) und der Halteabschnitt-Außenkontur (15) ein ringförmiger Spalt (17) ausgebildet wird, wobei nicht verfestigtes Partikelmaterial (PM) außerhalb des jeweiligen Spalts (17) von dem fertigausgebildeten Bauteil (1) entfernt wird, sodass in dem jeweiligen Spalt (17) nicht-verfestigtes Partikelmaterial (PM) im Kontakt mit der Halteraum-Innenkontur (9) und der Haltestück-Außenkontur (15) verbleibt, sodass das Bauteil (1) über das im jeweiligen Spalt (17) verbleibende Partikelmaterial (PM) spielfrei am Halterahmen (3) abgestützt bleibt.

2. Verfahren gemäß Anspruch 1, wobei wenigstens einer, mehrere oder alle der Halteräume (5) als muldenförmige Halteräume (5) ausgebildet werden, bei denen die jeweilige ringförmige Halteraumwand (7) einen Halteraumboden (26) ringförmig im Wesentlichen umgibt und welche jeweils eine dreidimensionale kalottenartige Halteraum-Innenkontur (9) aufweisen.

3. Verfahren gemäß Anspruch 2, wobei die den muldenförmigen Halteräumen (5) zugeordneten Halteabschnitte (13) mit einer zu der kalottenartigen Halteraum-Innenkontur (9) im Wesentlichen konformen Halteabschnitt-Außenkontur (15) ausgebildet werden, sodass als Spalt (17) zwischen der Halteabschnitt-Innenkontur (9) und der Halteabschnitt-Außenkontur (15) ein kappenartiger Spalt (17) erzeugt wird, in welchem nicht-verfestigtes Partikelmaterial (PM) verbleibt.

4. Verfahren gemäß einem der Ansprüche 1 bis 3, wobei zumindest zwei Halteräume (5) an im Wesentlichen einander entgegengesetzten Endabschnitten des Bauteils (1) ausgebildet werden.

5. Verfahren gemäß einem der Ansprüche 1 bis 4, wobei der Halterahmen (3) das Bauteil (1) zumindest teilweise oder geschlossen umgibt.

6. Verfahren gemäß einem der Ansprüche 1 bis 5, wobei der Halterahmen (3) als Rahmenschenkel oder Rahmenleisten (19, 21, 23, 24) aufweisend ausgebildet wird, wobei einer, mehrere oder alle der Halteräume (5) in Form von Ausnehmungen oder Vertiefungen in den Rahmenschenkeln oder den Rahmenleisten (19, 21, 23, 25) ausgebildet werden.

7. Verfahren gemäß einem der Ansprüche 1 bis 6, wobei einer, mehrere oder alle der Halteabschnitte (13) am Halterahmen (3) und/oder am Bauteil (3) als Vorsprung oder als Vorsprünge ausgebildet werden.

8. Verfahren gemäß einem der Ansprüche 1 bis 7, wobei einer mehrere oder alle der Halteräume (5) an Haltestegen (62) ausgebildet werden, die am Halterahmen (3) angeformt werden und sich vom Halterahmen (3) in Richtung zum Bauteil (1) erstrecken.

9. Verfahren gemäß einem der Ansprüche 1 bis 8, wobei der Halterahmen (3) in Form von wenigstens zwei stofflich separaten und miteinander im Eingriff stehenden Rahmenteilen (19, 21) derart ausgebildet wird, dass das Bauteil (1) durch bloßes Außereingriffbringen der mindestens zwei Rahmenteile (19, 21) von dem Halterahmen (3) lösbar ist.

10. Dreidimensionales Bauteil (1) mit Halterahmen (3), gemeinsam hergestellt durch sukzessives schichtweises selektives Verfestigen eines Partikelmaterials (PM), **dadurch gekennzeichnet daß** der Halterahmen (3) und/oder das Bauteil (1) eine Mehrzahl von Halteräumen (5) aufweist, welche jeweils eine den Halteraum (5) ringförmig im Wesentlichen umgebende Halteraumwand (7) aufweisen, welche eine ringförmige Halteraum-Innenkontur (9) und eine Halteraumöffnung (11) definiert, wobei in die Halteräume (5) eine entsprechende Mehrzahl von am Bauteil (5) und/oder am Halterahmen (1) ausgebildeten Halteabschnitten (13) mit einer Halteabschnitt-Außenkontur (15) über die zugehörige Halteraumöffnung (11) eingreifen, wobei die jeweilige Halteabschnitt-Außenkontur (15) umfänglich zu der jeweiligen Halteraum-Innenkontur (9) im Wesentlichen konform ist, wobei die Halteraum-Innenkontur (9) und die Halteabschnitt-Außenkontur (15) jeweils in einem geringen Abstand zueinander angeordnet sind, wodurch zwischen der Halteraum-Innenkontur (9) und der Halteabschnitt-Außenkontur (15) ein ringförmiger Spalt (17) vorliegt, in welchem nicht-verfestigtes Partikelmaterial (PM) im Kontakt mit der Halteraum-Innenkontur (9) und der Haltestück-Außenkontur (15) vorliegt, über welches das Bauteil (1) spielfrei am Halterahmen (3) abgestützt ist.

11. Dreidimensionales Bauteil (1) mit Halterahmen (3) gemäß Anspruch 10, wobei wenigstens einer, mehrere oder alle der Halteräume (5) als muldenförmige Halteräume (5) ausgebildet sind, bei denen die jeweilige ringförmige Halteraumwand (7) einen Halteraumboden (26) ringförmig im Wesentlichen umgibt und welche jeweils eine dreidimensionale kalottenartige Halteraum-Innenkontur (9) aufweisen.

12. Dreidimensionales Bauteil (1) mit Halterahmen (3) gemäß Anspruch 11, wobei die den muldenförmigen Halteräumen (5) zugeordneten Halteabschnitte (13) mit einer zu der kalottenartigen Halteraum-Innenkontur (9) im Wesentlichen konformen Halteabschnitt-Außenkontur (15) ausgebildet sind, sodass als Spalt (17) zwischen der Halteabschnitt-Innenkontur (9) und der Halteabschnitt-Außenkontur (15) ein kappenartiger Spalt (17) vorliegt, in welchem nicht-verfestigtes Partikelmaterial (PM) vorliegt.

13. Dreidimensionales Bauteil (1) mit Halterahmen (3) gemäß einem der Ansprüche 10-12, wobei zumindest zwei Halteräume (5) an im Wesentlichen einander entgegengesetzten Endabschnitten des Bauteils (1) ausgebildet sind und/oder wobei der Halterahmen (1) das Bauteil (3) zumindest teilweise oder geschlossen umgibt.

14. Dreidimensionales Bauteil (1) mit Halterahmen (3) gemäß einem der Ansprüche 10-13, wobei der Halterahmen (3) in Form von wenigstens zwei stofflich separaten und miteinander im Eingriff stehenden Rahmenteilen (19, 21) derart ausgebildet ist, dass das Bauteil (1) durch bloßes Außereingriffbringen der mindestens zwei Rahmenteile von dem Halterahmen (3) lösbar ist.

## Claims

1. A method for forming a three-dimensional component (1) by successive selective layer-by-layer solidification of a loose particulate material (PM), wherein a holding frame (3) is additionally formed while forming the three-dimensional component (1), **characterized in that** the holding frame (3) and/or the component (1) is formed with a plurality of holding spaces (5) each having a holding space wall (7), substantially surrounding the holding space (5) in an annular manner and defining an annular holding space inner contour (9) and a holding space opening (11), wherein a corresponding plurality of holding portions (13) formed at the component (1) and/or at the holding frame (3) and having a holding portion outer contour (15) engage into the holding spaces (5) via the associated holding space opening (11), wherein the respective holding portion outer contour (15) is formed circumferentially substantially conform to the respective holding space inner contour (9), wherein the holding space inner contour (9) and the holding portion outer contour (15) are each arranged in short distance from one another, whereby an annular gap (17) is formed between the holding space inner contour (9) and the holding portion outer contour (15), wherein non-solidified particulate material (PM) outside of the respective gap (17) is removed from the completed component (1), such that non-solidified particulate material (PM) remains in contact with the holding space inner contour (9) and the holding piece outer contour (15) in the respective gap (17), such that the component (1) remains supported at the holding frame (3) without clearance by the remaining particulate material (PM) in the respective gap (17).

2. The method according to claim 1, wherein at least one, several or all of the holding spaces (5) are formed as trough-shaped holding spaces (5), in which a holding space bottom (26) is annularly substantially surrounded by the respective annular holding space wall (7), and each having a three-dimensional calotte-like holding space inner contour (9).

3. The method according to claim 2, wherein the holding portions (13) assigned to the trough-shaped holding spaces (5) are formed with a holding portion outer contour (15) being substantially conform to the calotte-like holding space inner contour (9), such that a cap-like gap (17), in which non-solidified particulate material (PM) remains, is generated as the gap (17) between the holding portion inner contour (9) and the holding portion outer contour (15).

4. The method according to any of claims 1 to 3, wherein at least two holding spaces (5) are formed at substantially opposing end portions of the component (1).

5. The method according to any of claims 1 to 4, wherein the holding frame (3) surrounds the component (1) at least partially or in an enclosed manner.

6. The method according to any of claims 1 to 5, wherein the holding frame (3) is formed to have frame legs or frame bars (19, 21, 23, 24), wherein one, several or all of the holding spaces (5) are formed in the form of recesses or indentations in the frame legs or the frame bars (19, 21, 23, 24).

7. The method according to any of claims 1 to 6, wherein one, several or all of the holding portions (13) at the holding frame (3) and/or at the component (3) are formed as protrusion or as protrusions.

8. The method according to any of claims 1 to 7, wherein one, several or more of the holding spaces (5) are formed at holding webs (62), formed at the holding frame (3) and extending from the holding frame (3) towards the component (1).

9. The method according to any of claims 1 to 8, wherein the holding frame (3) is formed in the form of at least two materially separated frame parts (19, 21) engaging each other, such that the component (1) is detachable from the holding frame (3) by merely disengaging the at least two frame parts (19, 21).

10. A three-dimensional component (1) with a holding frame (3) jointly prepared by successive selective layer-by-layer solidification of a particulate material (PM), **characterized in that** the holding frame (3) and/or the component (1) has a plurality of holding spaces (5) each having a holding space wall (7), annularly substantially surrounding the holding space (5) and defining an annular holding space inner contour (9) and a holding space opening (11), wherein a corresponding plurality of holding portions (13) having a holding portion outer contour (15) and formed at the component (5) and/or at the holding frame (1) engage into the holding spaces (5) via the associated holding space opening (11), wherein the respective holding portion outer contour (15) is circumferentially substantially conform to the respective holding space inner contour (9), wherein the holding space inner contour (9) and the holding portion outer contour (15) are each arranged in a short distance from one another, whereby an annular gap (17) exists between the holding space inner contour (9) and the holding portion outer contour (15), in which non-solidified particulate material (PM) exists in contact with the holding space inner contour (9) and the holding piece outer contour (15), by which the component (1) is supported at the holding frame (3) without clearance.

11. The three-dimensional component (1) with the holding frame (3) according to claim 10, wherein at least one, several or all of the holding spaces (5) are formed as trough-shaped holding spaces (5), in which a holding space bottom (26) is annularly substantially surrounded by the respective annular holding space wall (7), and each having a three-dimensional calotte-like holding space inner contour (9).

12. The three-dimensional component (1) with the holding frame (3) according to claim 11, wherein the holding portions (13) assigned to the trough-shaped holding spaces (5) are formed with a holding portion outer contour (15) being substantially conform to the calotte-like holding space inner contour (9), such that a cap-like gap (17) exists as the gap (17) between the holding space inner contour (9) and the holding portion outer contour (15), in which non-solidified particulate material (PM) exists.

13. The three-dimensional component (1) with the holding frame (3) according to any of claims 10-12, wherein at least two holding spaces (5) are formed at substantially opposing end portions of the component (1) and/or wherein the holding frame (1) surrounds the component (3) at least partially or in an enclosed manner.

14. The three-dimensional component (1) with the holding frame (3) according to any of claims 10-13, wherein the holding frame (3) is formed in the form of at least two materially separated frame parts (19, 21) engaging each other, such that the component (1) is detachable from the holding frame (3) by merely disengaging the at least two frame parts.

## Revendications

1. Procédé de formation d'une pièce tridimensionnelle (1) par solidification successive et sélective par couches d'un matériau particulaire (PM), un châssis de maintien (3) étant également réalisé lors de la formation de la pièce tridimensionnelle (1), **caractérisé en ce que** le châssis de maintien (3) et/ou la pièce (1) est formé avec une pluralité d'espaces de maintien (5), qui présentent chacun une paroi d'espace de maintien (7) entourant globalement de manière annulaire l'espace de maintien (5), qui définit un contour interne annulaire d'espace de maintien (9) et une ouverture d'espace de maintien (11), une pluralité correspondante de portions de maintien (13), formées sur la pièce (1) et/ou sur le châssis de maintien (3) s'emboîtant dans les espaces de maintien (5) avec un contour externe de portion de maintien (15) par l'intermédiaire de l'ouverture d'espace de maintien (11) correspondante, le contour externe de portion de maintien (15) correspondant étant formé de manière circulaire et globalement conforme au contour interne d'espace de maintien (9), le contour interne d'espace de maintien (9) et le contour externe de portion de maintien (15) étant disposés à une faible distance l'un de l'autre, un interstice annulaire (17) étant ainsi formé entre le contour interne d'espace de maintien (9) et le contour externe de portion de maintien (15), le matériau particulaire (PM) non solidifié à l'extérieur de l'interstice (17) étant éliminé de la pièce finie (1), de façon à ce que, dans l'interstice (17) correspondant, le matériau particulaire (PM) non solidifié reste en contact avec le contour interne d'espace de maintien (9) et le contour externe de portion de maintien (15), de façon à ce que la pièce (1) reste soutenue sans jeu sur le châssis de maintien (3) par l'intermédiaire du matériau particulaire (PM) restant dans l'interstice (17) correspondant.

2. Procédé selon la revendication 1, au moins un, plusieurs ou tous les espaces de maintien (5) sont conçus comme des espaces de maintien en forme de cavité (5), dans lesquels la paroi d'espace de maintien annulaire (7) entoure un fond d'espace de maintien (26) de manière globalement annulaire et qui présentent un contour interne d'espace de maintien (9) tridimensionnel en forme de calotte.

3. Procédé selon la revendication 2, les portions de maintien (13) correspondant aux espaces de maintien (5) en forme de cavité étant formées avec un contour externe de portion de maintien (15) globalement conforme au contour interne d'espace de maintien (9) en forme de calotte, de façon à ce que, en tant qu'interstice (17), entre le contour interne de portion de maintien (9) et le contour externe de portion de maintien (15), un interstice (17) en forme de capuchon est produit, dans lequel il reste du matériau particulaire (PM) non solidifié.

4. Procédé selon l'une des revendications 1 à 3, au moins deux espaces de maintien (5) étant formés sur des portions d'extrémité opposées entre elles de la pièce (1).

5. Procédé selon l'une des revendications 1 à 4, le châssis de maintien (3) entourant la pièce (1) au moins partiellement ou complétement.

6. Procédé selon l'une des revendications 1 à 5, le châssis de maintien (3) présentant des montants ou des barres de châssis (19, 21, 23, 24), un, plusieurs ou tous les espaces de maintien (5) étant conçus sous la forme d'évidements ou de creux dans les montants ou les barres de châssis (19, 21, 23, 25).

7. Procédé selon l'une des revendications 1 à 6, une, plusieurs ou toutes les portions de maintien (13) du châssis de maintien (3) et/ou de la pièce (3) étant conçues comme des saillies.

8. Procédé selon l'une des revendications 1 à 7, un, plusieurs ou tous les espaces de maintien (5) étant réalisés sur des nervures de maintien (62) moulées sur le châssis de maintien (3) et qui s'étendent du châssis de maintien (3) en direction de la pièce (1).

9. Procédé selon l'une des revendications 1 à 8, le châssis de maintien (3) étant conçu sous la forme d'au moins deux parties de châssis (19, 21) distinctes et emboîtées l'une avec l'autre, de façon à ce que la pièce (1) puisse être détachée du châssis (3) par simple déboîtement des au moins deux parties de châssis (19, 21).

10. Pièce tridimensionnelle (1) avec un châssis de maintien (3), fabriqué par solidification successives, par couches et sélective d'un matériau particulaire (PM), **caractérisée en ce que** le châssis de maintien (3) et/ou la pièce (1) comprend une pluralité d'espaces de maintien (5), qui présentent chacun une paroi d'espace de maintien (7) entourant de manière globalement annulaire l'espace de maintien (5), qui définit un contour interne d'espace de maintien (9) annulaire et une ouverture d'espace de maintien (11), une pluralité correspondante de portions de maintien (13), formées sur la pièce (5) et/ou sur le châssis de maintien (1), s'emboîtant avec un contour externe de portion de maintien (15) par l'intermédiaire de l'ouverture d'espace de maintien (11) correspondant, le contour externe de portion de maintien (15) correspondant étant globalement conforme, sur sa circonférence, au contour interne d'espace de maintien (9), le contour interne d'espace de maintien (9) et le contour externe de portion de maintien (15) étant disposés à une faible distance l'un de l'autre, un interstice annulaire (17) existant ainsi entre le contour interne d'espace de maintien (9) et le contour externe de portion de maintien (15), dans lequel le matériau particulaire (PM) non solidifié reste en contact avec le contour interne d'espace de maintien (9) et le contour externe de portion de maintien (15), par l'intermédiaire duquel la pièce (1) est soutenue sans jeu sur le châssis de maintien (3).

11. Pièce tridimensionnelle (1) avec châssis de maintien (3) selon la revendication 10, au moins un, plusieurs ou tous les espaces de maintien (5) étant conçus comme des espaces de maintien (5) en forme de cavités, dans lesquels la paroi d'espace de maintien annulaire (7) correspondante entoure un fond d'espace de maintien (26) de manière globalement annulaire et qui présentent un contour interne d'espace de maintien (9) tridimensionnel en forme de calotte.

12. Pièce tridimensionnelle (1) avec châssis de maintien (3) selon la revendication 11, les portions de maintien (13) correspondant aux espaces de maintien (5) en forme de cavités étant conçues avec un contour externe de portion de maintien (15) globalement conforme au contour interne d'espace de maintien (9) en forme de calotte, de façon à ce que, en tant qu'interstice (17) entre le contour interne de portion de maintien (9) et le contour externe de portion de maintien (15), un interstice (17) en forme de capuchon existe, dans lequel se trouve du matériau particulaire (PM) non solidifié.

13. Pièce tridimensionnelle (1) avec châssis de maintien (3) selon l'une des revendications 10 à 12, au moins deux espaces de maintien (5) étant formés sur des portions d'extrémité globalement opposées entre elles de la pièce (1) et/ou le châssis de maintien (1) entourant la pièce (3) au moins partiellement ou de manière fermée.

14. Pièce tridimensionnelle (1) avec châssis de maintien (3) selon l'une des revendications 10 à 13, le châssis de maintien (3) étant conçu sous la forme d'au moins deux parties de châssis (19, 21) distinctes emboîtées entre elles, de façon à ce que la pièce (1) puisse être détachée du châssis de maintien (3) par simple déboîtement des au moins deux parties de châssis.
